# EUROPÄISCHE PATENTANMELDUNG

(11) **EP 4 138 229 A1**
(43) Veröffentlichungstag der Anmeldung: **22.02.2023**
(21) Anmeldenummer: 22190816.3
(22) Anmeldetag: 17.08.2022
(51) Int. Cl.: H01R 13/58, H01R 13/59

(54) **VERBINDER ZUR AUFNAHME EINES KABELABSCHNITTS EINES KABELS, VERWENDUNG EINES VERBINDERS UND HERSTELLUNG EINES VERBINDERS**

(30) Priorität: 20.08.2021 DE 102021209159
(71) Anmelder: Yamaichi Electronics Deutschland GmbH, 85609 Aschheim-Dornach (DE)
(72) Erfinder: QUITER, Michael, 57482 Wenden (DE); NIEMIETZ, Jana, 81929 München (DE)
(74) Vertreter: Müller-Boré & Partner Patentanwälte PartG mbB

(57) **Zusammenfassung**

Die Offenbarung betrifft einen Verbinder (1) zur Aufnahme eines Kabelabschnitts (50) eines Kabels, umfassend:

eine Kabelhaltevorrichtung (10), wobei die Kabelhaltevorrichtung (10) ausgelegt ist, den Kabelabschnitt (50) in umlaufender Richtung bezüglich einer Zentralachse (A) der Kabelhaltevorrichtung (10) zumindest teilweise zu umschließen, wobei die Kabelhaltevorrichtung (10) mindestens ein Halteschenkelelement (11) aufweist,
wobei jedes Halteschenkelelement (11) eine Außenfläche (12A) aufweist, wobei die Außenfläche (12A) umfasst:

zumindest zwei druckfreie Bereiche, und

zumindest einen Aufdruckbereich, wobei der zumindest eine Aufdruckbereich zwischen den mindestens zwei druckfreien Bereichen angeordnet ist,

Die Offenbarung betrifft ferner eine Verwendung eines entsprechenden Verbinders und ein Verfahren zur Herstellung eines entsprechenden Verbinders.

## Beschreibung

Die Erfindung betrifft einen Verbinder zur Aufnahme eines Kabelabschnitts eines Kabels, eine Verwendung eines Verbinders zur Aufnahme eines Kabelabschnitts eines Kabels und ein Verfahren zur Herstellung eines Verbinders zur Aufnahme eines Kabelabschnitts eines Kabels.

Die Erfindung liegt auf dem Gebiet der Verbindertechnologie, insbesondere auf dem Gebiet der Verbindertechnologie für ein Verbinden eines Kabelabschnitts mit einem Verbinder. Hierbei wird herkömmlich oft eine Kompressionsmanschette an dem Kabelabschnitt angeordnet, wobei eine Überwurfmutter mit dem Verbinder verschraubbar ist, um die Kompressionsmanschette zu komprimieren und somit gegen den Kabelabschnitt zu drücken, um diesen zu halten.

Im Rahmen der Erfindung wurde festgestellt, dass die Lebensdauer einer solchen herkömmlichen Kompressionsmanschette und einer solchen Überwurfmutter durch deren Gebrauch stark beschränkt wird. Insbesondere wurde hierbei festgestellt, dass es während dem Verschrauben zu einem signifikanten Abrieb von Material zwischen Kompressionsmanschette und Überwurfmutter kommt. Ferner wurde festgestellt, dass ein Auftreten eines solchen Abriebs, beispielsweise in Form von Spänen, innerhalb eines Verbinders zudem die Verbindungssicherheit beeinträchtigen kann, z.B. durch ein Verursachen eines Kurzschlusses.

Es ist daher die Aufgabe der vorliegenden Erfindung einen verbesserten Verbinder zur Aufnahme eines Kabelabschnitts eines Kabels bereitzustellen.

Diese Aufgabe wird insbesondere durch einen Verbinder zur Aufnahme eines Kabelabschnitts eines Kabels, eine Verwendung eines Verbinders zur Aufnahme eines Kabelabschnitts eines Kabels und ein Verfahren zur Herstellung eines Verbinders zur Aufnahme eines Kabelabschnitts eines Kabels gemäß den unabhängigen Ansprüchen gelöst. Bevorzugte Ausführungsformen bilden den Gegenstand der abhängigen Ansprüche. Durch diese Lösung kann insbesondere ein verbesserter Verbinder zur Aufnahme eines Kabelabschnitts eines Kabels mit beispielsweise verlängerter Lebensdauer, einfacherer Herstellung und erhöhter Verbindungssicherheit bereitgestellt werden, wobei ein Auftreten eines Abriebs zwischen Kabelhaltevorrichtung und Kompressionselement verhindert bzw. reduziert ist.

Ein Aspekt betrifft einen Verbinder zur Aufnahme eines Kabelabschnitts eines Kabels. Der Verbinder kann hierbei ausgelegt sein, den Kabelabschnitt mit einem oder mehreren Kontaktelementen elektrisch zu verbinden, wobei der Verbinder nicht hierauf beschränkt ist. Beispielsweise kann der Verbinder zusätzlich oder alternativ ausgelegt sein, den Kabelabschnitt mit einem zweiten Kabelabschnitt eines zweiten Kabels zu verbinden. Beispielsweise kann der Verbinder alternativ oder zusätzlich ausgelegt sein, den Kabelabschnitt mit einer oder mehreren physischen Vorrichtungen mechanisch zu verbinden. Beispielsweise kann der Verbinder als ein Wandverbinder ausgebildet sein, wobei der Wandverbinder ausgelegt sein kann, den Kabelabschnitt mit einer Wand, beispielsweise einem Durchgangsloch einer Wand, mechanisch zu verbinden bzw. an der Wand und/oder dem Durchgangsloch der Wand mechanisch zu befestigen.

Der Verbinder kann vorzugsweise das Kabel bzw. den Kabelabschnitt umfassen. Der Kabelabschnitt kann hierbei als ein Endabschnitt oder ein Zwischenabschnitt eines Kabels ausgebildet sein. Das Kabel kann insbesondere als ein beliebiges Kabel, beispielsweise ein Kabel zur elektrischen und/oder optischen Daten- und/oder Leistungsübertragung, ausgebildet sein. Das Kabel bzw. der Kabelabschnitt kann hierbei in einer Querschnittsebene senkrecht zu einer Kabelachse des Kabels bzw. des Kabelabschnitts eine im Wesentlichen kreisrunde und/oder ovale Querschnittsform aufweisen. Das Kabel bzw. der Kabelabschnitt ist jedoch nicht hierauf beschränkt, und andere Querschnittsformen sind möglich. Insbesondere kann der Kabelabschnitt eine im Wesentlichen identische Querschnittsform zu einer Querschnittsform des restlichen Kabels aufweisen. Alternativ kann der Kabelabschnitt eine erste Querschnittsform, beispielsweise eine im Wesentlichen kreisrunde Querschnittsform, aufweisen, wobei das restliche Kabel eine zweite Querschnittsform, welche sich von der ersten Querschnittsform unterscheidet, aufweisen.

Im Wesentlichen ist im Rahmen dieser Offenbarung als insbesondere umfassend geringer herstellungs- und umweltbedingter Unterschiede zu verstehen, falls nicht stellenweise anders definiert.

Der Verbinder umfasst insbesondere eine Kabelhaltevorrichtung. Die Kabelhaltevorrichtung ist insbesondere ausgelegt, den Kabelabschnitt in umlaufender Richtung bezüglich einer Zentralachse der Kabelhaltevorrichtung zumindest teilweise, vorzugsweise vollständig zu umschließen bzw. zu umgeben. Insbesondere kann bei einer vollständigen Umschließung bzw. Umgebung des Kabelabschnitts in umlaufender Richtung bezüglich einer Zentralachse der Kabelhaltevorrichtung eine hohe Verbindungssicherheit und/oder mechanische Stabilität des Verbinders ermöglicht werden. Insbesondere kann bei einer teilweise Umschließung bzw. Umgebung des Kabelabschnitts in umlaufender Richtung bezüglich einer Zentralachse der Kabelhaltevorrichtung eine einfache Montage und/oder ein einfaches Austauschen der Kabelhaltevorrichtung ermöglicht werden. Die Kabelhaltevorrichtung kann hierbei beispielsweise zumindest teilweise hohlzylinderartig ausgebildet sein, wobei die Zentralachse im Wesentlichen einer Zentralachse eines entsprechenden Hohlzylinders entspricht.

Die Kabelhaltevorrichtung weist insbesondere mindestens ein Halteschenkelelement auf. Das mindestens eine Halteschenkelelement kann hierbei vorzugsweise zumindest teilweise mechanisch, insbesondere zumindest teilweise elastisch bzw. rückstellfähig, verlagerbar ausgebildet sein, um mit dem Kabelabschnitt in Eingriff zu gelangen und/oder den Kabelabschnitt an der Kabelhaltevorrichtung zu halten bzw. zu befestigen. Das mindestens eine Halteschenkelelement kann hierbei vorzugsweise zumindest teilweise verlagerbar, beispielsweise durch eine Kipp-Bewegung des mindestens einen Halteschenkelelements, entlang einer radialen Richtung bezüglich der Zentralachse ausgebildet zu sein.

Ein Betriebszustand des Verbinders kann hierbei insbesondere ein Zustand sein, in dem der Kabelabschnitt in den Verbinder aufgenommen und durch die Kabelhaltevorrichtung an der Kabelhaltevorrichtung gehalten bzw. befestigt ist. Der Verbinder bzw. die Kabelhaltevorrichtung kann insbesondere ausgelegt sein, so dass in dem Betriebszustand eine Kabelachse des Kabelabschnitts im Wesentlichen parallel, vorzugsweise im Wesentlichen identisch ist zu der Zentralachse der Kabelhaltevorrichtung. Vorzugsweise ist die Kabelhaltevorrichtung ausgebildet, um in dem Betriebszustand eine Zugentlastung für den Kabelabschnitt zu bilden.

Die Kabelhaltevorrichtung kann hierbei insbesondere einen hohlzylinderartigen Abschnitt aufweisen, wobei der hohlzylinderartige Abschnitt ausgebildet ist, in dem Betriebszustand den Kabelabschnitt in einer umlaufenden Richtung bezüglich der Zentralachse zumindest teilweise, vorzugsweise vollständig zu umschließen. Mindestens ein Halteschenkelelement des mindestens einen Halteschenkelelements kann insbesondere mindestens ein befestigtes Ende und mindestens ein freies Ende aufweisen. Das mindestens eine befestigte Ende kann insbesondere an dem hohlzylinderartigen Abschnitt befestigt und/oder mit dem hohlzylinderartigen Abschnitt einstückig ausgebildet sein. Das mindestens eine freie Ende kann insbesondere verlagerbar, vorzugsweise elastisch bzw. rückstellfähig verlagerbar bezüglich dem mindestens einen festen Ende und/oder bezüglich der Zentralachse ausgebildet sein. Das mindestens eine Halteschenkelelement kann insbesondere einstückig mit dem hohlzylinderartigen Abschnitt ausgebildet sein. Das mindestens eine Halteschenkelelement kann sich beispielsweise entlang einer Schenkelrichtung zwischen dem mindestens einen befestigten Ende und dem mindestens einen freien Ende erstrecken, wobei die Schenkelrichtung vorzugsweise im Wesentlichen parallel zu der Zentralachse ist. Die Schenkelrichtung ist jedoch nicht hierauf beschränkt, und andere Schenkelrichtungen sind möglich, wie zum Beispiel eine Schenkelrichtung, die einer umlaufenden Richtung um die Zentralachse entspricht.

Jedes Halteschenkelelement des mindestens einen Halteschenkelelements weist insbesondere eine Außenfläche auf. Die Außenfläche kann hierbei als eine Oberfläche ausgebildet sein, welche auf einer in radialer Richtung bezüglich der Zentralachse abgewandten Seite des jeweiligen Halteschenkelelements angeordnet bzw. ausgebildet ist. Jedes Halteschenkelelement kann ferner insbesondere eine Innenfläche aufweisen. Die Innenfläche kann hierbei als eine Oberfläche ausgebildet sein, welche auf einer in radialer Richtung bezüglich der Zentralachse zugewandten Seite des jeweiligen Halteschenkelelements angeordnet ist. Insbesondere können die Außenfläche und die Innenfläche eines jeweiligen Halteschenkelelements einander gegenüberliegend bezüglich dem jeweiligen Halteschenkelelement angeordnet bzw. ausgebildet sein. Jedes Halteschenkelelement kann ferner mindestens eine, vorzugsweise mindestens zwei Seitenflächen aufweisen. Die mindestens eine Seitenfläche kann insbesondere zwischen der Außenfläche und der Innenfläche angeordnet sein und/oder die mindestens eine Seitenfläche kann an die Außenfläche und an die Innenfläche angrenzen, um die Außenfläche und die Innenfläche zu verbinden. Insbesondere kann die Außenfläche zumindest teilweise direkt an die Innenfläche angrenzen.

Die Außenfläche des jeweiligen Halteschenkelelements kann insbesondere mindestens zwei druckfreie Bereiche und mindestens einen Aufdruckbereich umfassen, wobei der mindestens eine Aufdruckbereich zwischen mindestens zwei druckfreien Bereichen der mindestens zwei druckfreien Bereiche angeordnet ist. Insbesondere kann der zumindest bzw. mindestens eine Aufdruckbereich zwischen mindestens zwei druckfreien Bereichen der zumindest bzw. mindestens zwei druckfreien Bereiche entlang der umlaufenden Richtung um die bzw. bezüglich der Zentralachse angeordnet sein. Mit anderen Worten, der zumindest bzw. mindestens eine Aufdruckbereich und die mindestens zwei druckfreien Bereiche können bevorzugt nacheinander entlang der umlaufenden Richtung angeordnet sein, wobei der zumindest bzw. mindestens eine Aufdruckbereich zwischen den mindestens zwei druckfreien Bereichen angeordnet sein kann. Das mindestens eine Halteschenkelelement ist ausgebildet, durch eine auf die Außenfläche gerichtete Kraft entlang einer radialen Richtung bezüglich der Zentralachse verlagerbar zu sein, um den Kabelabschnitt an der Kabelhaltevorrichtung zu halten. Die Kraft kann hierbei insbesondere im Wesentlichen radial nach innen bezüglich der Zentralachse gerichtet sein. Die Kraft kann insbesondere auf den mindestens einen Aufdruckbereich, vorzugsweise nur auf den mindestens einen Aufdruckbereich, gerichtet sein. Das mindestens eine Halteschenkelelement kann hierbei insbesondere zumindest teilweise elastisch bzw. rückstellfähig verlagerbar ausgebildet sein. Der mindestens eine Aufdruckbereich kann insbesondere zwei-dimensionale und/oder ein-dimensionale und/oder null-dimensionale bzw. punktartige Teilbereiche der Außenfläche umfassen. Mit anderen Worten kann der mindestens eine Aufdruckbereich mindestens einen Flächenbereich, beispielsweise eine Aufdruckfläche, und/oder mindestens einen Linienbereich, beispielsweise eine Aufdruckgerade, und/oder mindestens einen Punktbereich, beispielsweise einen Aufdruckpunkt, umfassen. Die mindestens zwei druckfreien Bereiche können insbesondere zwei-dimensionale und/oder ein-dimensionale und/oder null-dimensionale bzw. punktartige Teilbereiche der Außenfläche umfassen. Mit anderen Worten können die mindestens zwei druckfreien Bereiche mindestens einen Flächenbereich, beispielsweise eine druckfreie Fläche, und/oder mindestens einen Linienbereich, beispielsweise eine druckfreie Gerade, und/oder mindestens einen Punktbereich, beispielsweise einen druckfreien Punkt, umfassen. Der mindestens eine Aufdruckbereich kann ferner als ein zusammenhängender Bereich oder als eine Menge von getrennten bzw. nicht verbundenen Teilbereichen ausgebildet sein. Die mindestens zwei druckfreien Bereiche können insbesondere als eine Menge von getrennten bzw. nicht verbundenen Teilbereichen oder als eine Menge von aneinander angrenzenden bzw. verbundenen Teilbereichen ausgebildet sein. Insbesondere kann durch eine derartig ausgebildete Außenfläche somit bei der Verlagerung des jeweiligen Halteschenkelelements kontrolliert bzw. vorbestimmt werden, welche Bereiche der Außenfläche einen Aufdruck bzw. die gerichtete Kraft erfahren und/oder welche Bereiche der Außenfläche keinen Aufdruck erfahren bzw. die gerichtete Kraft nicht erfahren.

Insbesondere können mindestens zwei der mindestens zwei druckfreien Bereiche die Außenfläche in umlaufender Richtung um die Zentralachse begrenzen. Mit anderen Worten kann die Außenfläche mindestens zwei druckfreie Bereiche der mindestens zwei druckfreien Bereiche umfassen, welche im umlaufender Richtung um die Zentralachse an die mindestens eine Seitenfläche und/oder die Innenfläche angrenzen. Mit anderen Worten kann die Außenfläche ausgelegt sein, dass der mindestens eine Aufdruckbereich nicht, insbesondere nicht direkt, an die mindestens eine Seitenfläche und/oder die Innenfläche angrenzt. Hierdurch kann insbesondere gewährleistet werden, dass ein Grenzbereich bzw. ein Randbereich der Außenfläche eines entsprechenden Halteschenkelelements, insbesondere während einer Verlagerung durch die gerichtete Kraft, nicht in Kontakt mit einem entsprechenden Kompressionselement kommt, wodurch ein Abrieb von Material zwischen dem jeweiligen Halteschenkelelement und dem Kompressionselement verhindert bzw. reduziert wird.

Jedes Halteschenkelelement kann insbesondere derart ausgebildet sein, dass ein Abstand der mindestens zwei druckfreien Bereiche von der Zentralachse geringer ist, als ein Abstand des mindestens einen Aufdruckbereichs von der Zentralachse. Ein Abstand zwischen den mindestens zwei druckfreien Bereichen bzw. dem mindestens einen Aufdruckbereich und der Zentralachse ist hierbei als ein Abstand zwischen jeweils einem Punkt der mindestens zwei druckfreien Bereiche bzw. des mindestens einen Aufdruckbereichs in einer imaginären Ebene senkrecht zu der Zentralachse und dem Druchstoßpunkt der Zentralachse durch die imaginäre Ebene zu verstehen. Vorzugsweise ist der Abstand jedes Punktes des mindestens einen Aufdruckbereichs von der Zentralachse in der imaginären Ebene größer als der Abstand jedes Punktes der mindestens zwei druckfreien Bereiche. Vorzugsweise ist der Abstand jedes Punktes des mindestens einen Aufdruckbereichs von der Zentralachse in jeder imaginären Ebene, welche den mindestens einen Aufdruckbereich schneidet, größer als der Abstand jedes Punktes der mindestens zwei druckfreien Bereiche.

Insbesondere kann durch eine solche Ausgestaltung der Außenfläche des mindestens einen Halteschenkelelements ermöglicht werden, dass ein Aufdruckbereich des jeweiligen Halteschenkelelements zwischen den druckfreien Bereichen des jeweiligen Halteschenkelelements angeordnet ist. Insbesondere kann somit vermieden bzw. reduziert werden, dass beispielsweise bei einer Verschraubung der Kabelhaltevorrichtung mit beispielsweise einer Überwurfmutter bzw. Kompressionsmutter ein Abrieb zwischen den jeweiligen druckfreien Bereichen, insbesondere den jeweiligen druckfreien Bereichen welche eine Grenze zwischen der Außenfläche und einer Seitenfläche und/oder der Innenfläche umfassen, und der Überwurfmutter bzw. Kompressionsmutter auftritt, um somit zumindest die Lebensdauer der Kabelhaltevorrichtung bzw. des Verbinders zu erhöhen.

Vorzugsweise weist zumindest ein Halteschenkelelement, bevorzugt jedes Halteschenkelelement, des mindestens einen Halteschenkelelements eine, insbesondere genau einen, Aufdruckbereich und zwei, insbesondere genau zwei, druckfreie Bereiche auf, wobei der eine Aufdruckbereich zwischen den zwei druckfreien Bereichen angeordnet ist. Vorzugsweise sind der eine Aufdruckbereich und die zwei druckfreien Bereiche derart angeordnet, dass in jeder den Aufdruckbereich schneidenden Querschnittsebene senkrecht zu der Zentralachse der Aufdruckbereich zwischen den zwei druckfreien Bereichen angeordnet ist.

Insbesondere kann die mindestens eine Außenfläche in einer Querschnittsebene senkrecht zu der Zentralachse eine erste Krümmung aufweisen, wobei die Außenfläche in der Querschnittsebene einen Maximal-Abstand der Außenfläche von der Zentralachse aufweist, wobei die erste Krümmung größer ist, als eine Krümmung eines Kreises mit einem Radius, der dem Maximal-Abstand entspricht. Die Querschnittsebene ist hierbei als eine imaginäre Ebene zu verstehen, welche senkrecht zu der Zentralachse angeordnet ist. Jeder Punkt der Außenfläche in der Querschnittsebene kann hierbei insbesondere einen Punktabstand zwischen dem jeweiligen Punkt und der Zentralachse aufweisen. Der Maximal-Abstand ist hierbei als ein größter Punktabstand der Punktabstände zu verstehen. Insbesondere kann die erste Krümmung und die Krümmung des Kreises mit einem Radius, der dem Maximal-Abstand entspricht, das gleiche Vorzeichen haben, wobei ein Betrag der ersten Krümmung größer ist als ein Betrag der Krümmung des Kreises mit dem Radius, der dem Maximal-Abstand entspricht.

Insbesondere kann hierdurch vermieden bzw. reduziert werden, dass beispielsweise bei einer Verschraubung der Kabelhaltevorrichtung mit beispielsweise einer Überwurfmutter bzw. Kompressionsmutter ein Abrieb zwischen dem jeweiligen Halteschenkelelement und der Überwurfmutter bzw. Kompressionsmutter auftritt.

Insbesondere kann jede Außenfläche in mindestens einer, bevorzugt jeder, Querschnittsebene senkrecht zu der Zentralachse mindestens einen entferntesten Punkt aufweisen. Der mindestens eine entfernteste Punkt ist hierbei als mindestens ein Punkt der Außenfläche zu verstehen, welcher einen größten Abstand aller Punkte der Außenfläche in der jeweiligen Querschnittsebene zu dem Durchstoßpunkt der Zentralachse in der jeweiligen Querschnittsebene aufweist. Die Außenfläche kann eine Vielzahl von entferntesten Punkten aufweisen. Die Außenfläche kann in zumindest einem, vorzugsweise allen, entferntesten Punkt des mindestens einen entferntesten Punktes eine Krümmung in der jeweiligen Querschnittsebene aufweisen, welche größer ist als eine Krümmung eines Kreises mit einem Radius, der dem größten Abstand entspricht. Der mindestens eine Aufdruckbereich des jeweiligen Halteschenkelelements kann insbesondere den mindestens einen entferntesten Punkt umfassen.

Insbesondere kann hierdurch vermieden bzw. reduziert werden, dass beispielsweise bei einer Verschraubung der Kabelhaltevorrichtung mit beispielsweise einer Überwurfmutter bzw. Kompressionsmutter ein Abrieb zwischen dem jeweiligen Halteschenkelelement und der Überwurfmutter bzw. Kompressionsmutter auftritt.

Insbesondere kann die Kabelhaltevorrichtung zumindest teilweise formgefräst bzw. leitkurvengefräst sein. Hierbei kann insbesondere die Außenfläche jedes Halteschenkelelements formgefräst bzw. leitkurvengefräst sein. Vorzugsweise ist nur die Außenfläche jedes Halteschenkelelements formgefräst bzw. leitkurvengefräst. Hierdurch kann eine besonders einfache und effiziente Herstellungsweise der Kabelhaltevorrichtung bzw. des Verbinders ermöglicht werden, wobei diese Herstellungsweise insbesondere kostengünstiger als alternative Herstellungsverfahren ist.

Insbesondere kann die Außenfläche eines jeweiligen Halteschenkelelements in der Querschnittsebene Knick-frei bzw. Kanten-frei ausgebildet sein. Mit anderen Worten kann die Außenfläche eines jeweiligen Halteschenkelelements in einer, vorzugsweise jeder, entsprechenden Querschnittsebene durch eine differenzierbare Funktion dargestellt werden. Hierdurch kann eine einfachere Verwendung und Herstellung der Kabelhaltevorrichtung ermöglicht werden.

Insbesondere kann der Verbinder einen Verbinderkörper umfassen, wobei der Verbinderkörper ausgelegt ist, den Kabelabschnitt eines Kabels zumindest teilweise in einer Kabelaufnahme des Verbinderkörpers aufzunehmen. Die Kabelhaltevorrichtung kann insbesondere an dem Verbinderkörper anbringbar und/oder befestigbar, vorzugsweise verdrehsicher gegen eine relative Verdrehung von Verbinderkörper und Kabelhaltevorrichtung anbringbar und/oder befestigbar, ausgebildet sein. Insbesondere kann die Kabelhaltevorrichtung eine erste Ausrichtungseinrichtung aufweisen und der Verbinderkörper eine zweite Ausrichtungseinrichtung aufweisen, wobei die erste Ausrichtungseinrichtung mit der zweiten Ausrichtungseinrichtung in Eingriff bringbar ausgebildet ist. Insbesondere kann hierdurch eine gewünschte bzw. benötigte Ausrichtung der Kabelhaltevorrichtung relativ zu dem Verbinderkörper gewährleistet werden. Die erste Ausrichtungseinrichtung kann beispielsweise als mindestens ein Ausrichtungsvorsprung und/oder als mindestens eine Ausrichtungsnase ausgebildet sein. Die zweite Ausrichtungseinrichtung kann beispielsweise als mindestens eine Ausrichtungsaussparung und/oder als mindestens eine Ausrichtungsaufnahme ausgebildet sein. Beispielsweise kann der mindestens eine Ausrichtungsvorsprung zur Aufnahme in der mindestens einen Ausrichtungsaufnahme ausgebildet sein. Die erste Ausrichtungseinrichtung und die zweite Ausrichtungseinrichtung sind jedoch nicht auf eine derartige Ausbildung beschränkt.

Alternativ kann der Verbinderkörper einstückig mit der Kabelhaltevorrichtung ausgebildet sein.

Insbesondere kann der Verbinder ferner ein Kompressionselement umfassen, welches derart mit der Kabelhaltevorrichtung und/oder dem Verbinderkörper verschraubbar ist, dass das Kompressionselement zumindest teilweise eine im Wesentlichen radial nach innen bezüglich der Zentralachse auf den Aufdruckbereich gerichtete Kraft ausübt, um das mindestens eine Halteschenkelelement in Richtung der Zentralachse zu verlagern, vorzugsweise zu kippen. Das Kompressionselement kann insbesondere ein erstes Gewinde aufweisen, wobei das erste Gewinde insbesondere als ein Innengewinde ausgebildet sein kann. Die Kabelhaltevorrichtung kann insbesondere ein zweites Gewinde aufweisen, wobei das zweite Gewinde insbesondere als ein Außengewinde, vorzugsweise an dem hohlzylinderartigen Abschnitt, ausgebildet sein kann. Der Verbinderkörper kann insbesondere ein drittes Gewinde aufweisen, wobei das dritte Gewinde insbesondere als ein Außengewinde ausgebildet sein kann. Das erste Gewinde kann insbesondere mit dem zweiten Gewinde und/oder dem dritten Gewinde verschraubbar sein. Hierdurch kann eine einfache Montage und ein sicherer Sitz des Kompressionselements ermöglicht werden.

Das Kompressionselement kann ferner eine im Wesentlichen kegelstumpfartige Innenfläche aufweisen, wobei die kegelstumpfartige Innenfläche ausgelegt ist, durch eine Verschraubung des Kompressionselements mit der Kabelhaltevorrichtung und/oder dem Verbinderkörper einen Druck auf den mindestens einen Aufdruckbereich des mindestens einen Halteschenkelelements auszuüben. Die kegelstumpfartige Innenfläche des Kompressionselements kann hierbei insbesondere durch direkten Kontakt mit dem mindestens einen Aufdruckbereich und/oder durch indirekten Kontakt über ein oder mehrere Elemente (beispielsweise über eine Schutzeinrichtung, wie weiter unten beschrieben) zwischen dem mindestens einen Aufdruckbereich und der kegelstumpfartigen Innenfläche einen Druck auf den mindestens einen Aufdruckbereich ausüben. Das Kompressionselement kann insbesondere als Kompressionsmutter bzw. als Überwurfmutter ausgebildet sein. Hierdurch kann eine einfache Verlagerung des mindestens einen Halteschenkelelements ermöglicht werden, um den Betriebszustand herzustellen.

Die kegelstumpfartige Innenfläche kann insbesondere mindestens eine kegelstumpfartige Teilinnenfläche aufweisen. Die mindestens eine kegelstumpfartige Teilinnenfläche kann insbesondere eine erste kegelstumpfartige Teilinnenfläche, welche einen ersten Kegelwinkel aufweist, und eine zweite kegelstumpfartige Teilinnenfläche, welche einen zweiten Kegelwinkel aufweist, umfassen, wobei der erste Kegelwinkel unterschiedlich zu dem zweiten Kegelwinkel ist. Insbesondere kann durch eine solche Ausbildung der kegelstumpfartigen Innenfläche eine Anpassung des Drucks auf den mindestens einen Aufdruckbereich während dem Verschrauben ermöglichen. Ein Kegelwinkel kann in diesem Sinne als ein Öffnungswinkel eines entsprechenden Kegels bzw. Kegelstumpfes verstanden werden. Beispielsweise kann die erste kegelstumpfartige Teilinnenfläche zwischen dem ersten Gewinde und der zweiten kegelstumpfartigen Teilinnenfläche angeordnet sein, wobei der erste Kegelwinkel größer ist als der zweite Kegelwinkel.

Insbesondere kann das Kompressionselement mindestens eine zylinderartige Innenfläche aufweisen. Insbesondere kann die kegelstumpfartige Innenfläche und/oder mindestens eine kegelstumpfartige Teilinnenfläche an mindestens eine zylinderartige Innenfläche angrenzen. Insbesondere kann mindestens eine zylinderartige Innenfläche an mindestens eine kegelstumpfartige Teilinnenfläche angrenzen. Hierdurch kann beispielsweise eine zu weite Verlagerung eines Halteschenkelelements vermieden werden.

Insbesondere kann das mindestens eine Halteschenkelelement mindestens zwei Halteschenkelelelemente, beispielsweise drei oder vier oder fünf Halteschenkelelemente, umfassen. Beispielsweise können jeweils mindestens zwei der mindestens zwei Halteschenkelelemente zumindest teilweise einander gegenüberliegend bezüglich der Zentralachse angeordnet bzw. ausgebildet sein. Hierdurch kann eine insbesondere hohe Haltesicherheit des Kabelabschnitts durch die Kabelhaltevorrichtung ermöglicht werden.

Insbesondere können mindestens zwei Halteschenkelelement der mindestens zwei Halteschenkelelemente im Wesentlichen formgleich ausgebildet sein. Zwei Halteschenkelelelemente sind in diesem Sinne als formgleich zu verstehen, wenn eine erste Form eines ersten Halteschenkelelements im Wesentlichen durch Verschiebungen und/oder Drehungen und/oder Spiegelungen und/oder zentrische Streckungen auf eine zweite Form eines zweiten Halteschenkelelements abgebildet werden kann. In diesem Sinn kann formgleich als im Wesentlichen geometrisch ähnlich verstanden werden. Hierdurch kann eine einfache Herstellung der Kabelhaltevorrichtung ermöglicht werden. Ferner kann hierdurch ein Ausrichtungsschritt der Kabelhaltevorrichtung relativ zu dem Kabelabschnitt und/oder dem Verbinderkörper unnötig werden.

Jeweils mindestens zwei formgleiche Halteschenkelelemente des mindestens einen Halteschenkelelements können insbesondere einander im Wesentlichen gegenüberliegend bezüglich der Zentralachse ausgebildet sein.

Alternativ kann jedes Halteschenkelelement des mindestens einen Halteschenkelelements nicht formgleich zu jedem anderen Halteschenkelelement des mindestens einen Halteschenkelelements ausgebildet sein. Hierdurch kann eine präzise Anpassung der Kabelhaltevorrichtung an einen entsprechenden Kabelabschnitt ermöglicht werden.

Insbesondere kann das mindestens eine Halteschenkelelement mindestens eine erste Formgruppe von Halteschenkelelementen und mindestens eine zweite Formgruppe von Halteschenkelelementen umfassen. Die erste Formgruppe kann insbesondere mindestens ein Halteschenkelelement aufweisen, welches im Wesentlichen formgleich zu einer ersten Halteschenkelelementform ist. Die zweite Formgruppe kann insbesondere mindestens ein Halteschenkelelement aufweisen, welches im Wesentlichen formgleich zu einer zweiten Halteschenkelelementform ist. Die erste Halteschenkelelementform kann insbesondere als nicht formgleich zu der zweiten Halteschenkelelementform ausgebildet sein. Hierdurch kann insbesondere ein Halt des Kabelabschnitts in bzw. an der Kabelhaltevorrichtung angepasst werden, beispielsweise bezüglich einer Querschnittsform des Kabelabschnitts angepasst werden, wodurch ein sicherer Halt des Kabelabschnitts in bzw. an der Kabelhaltevorrichtung gewährleistet werden kann.

Insbesondere kann das mindestens eine Halteschenkelelement mindestens zwei Halteschenkelelemente umfassen, wobei die mindestens zwei Halteschenkelelemente im Wesentlich gleich beabstandet in umlaufender Richtung bezüglich der Zentralachse angeordnet sind. Hierdurch kann insbesondere ein gleichmäßiger Halt des Kabelabschnitts in bzw. an der Kabelhaltevorrichtung ermöglicht werden. Ferner kann hierdurch insbesondere ein Herstellungsverfahren des Verbinders bzw. der Kabelhaltevorrichtung vereinfacht werden.

Insbesondere kann mindestens ein, vorzugsweise jedes, Halteschenkelelement des mindestens einen Halteschenkelelements mindestens eine Halteeinrichtung umfassen. Die mindestens eine Halteeinrichtung kann hierbei insbesondere auf der Innenfläche des jeweiligen Halteschenkelelements angeordnet bzw. ausgebildet sein. Die mindestens eine Halteeinrichtung kann insbesondere mit dem Kabelabschnitt in Eingriff bringbar ausgebildet sein. Die mindestens eine Halteeinrichtung kann beispielsweise mindestens eine Halterippe und/oder mindestens einen Haltevorsprung aufweisen. Die mindestens eine Halteeinrichtung kann insbesondere eine erste Zugentlastungseinrichtung aufweisen, wobei die erste Zugentlastungseinrichtung ausgelegt ist, in dem Betriebszustand eine Bewegung des Kabelabschnitts entlang einer Einführrichtung des Kabelabschnitts im Wesentlichen parallel zu der Zentralachse und/oder entgegengesetzt zu der Einführrichtung des Kabelabschnitts und/oder in umlaufender Richtung um die Zentralachse zu blockieren bzw. zu reduzieren. Die Einführrichtung des Kabelabschnitts kann insbesondere eine Richtung sein, entlang welcher der Kabelabschnitt in die Kabelhaltevorrichtung eingeführt wird, um den Kabelabschnitt in dem Verbinder aufzunehmen. Die Einführrichtung des Kabelabschnitts kann insbesondere parallel zu der Zentralachse sein und/oder entlang der Zentralachse verlaufen. Somit kann ein sicherer Halt des Kabelabschnitts in bzw. an der Kabelhaltevorrichtung gewährleistet werden.

Insbesondere kann die Außenfläche mindestens eines Halteschenkelelements, vorzugsweise aller Halteschenkelelemente, der mindestens einen Halteschenkelelemente zumindest teilweise im Wesentlichen kegelartig und/oder kegelstumpfartig ausgebildet sein. Insbesondere kann hierdurch eine einfache Geometrie der jeweiligen Außenfläche ermöglicht werden, wodurch eine vereinfachte Herstellung der Kabelhaltevorrichtung bzw. des Verbinders ermöglicht wird.

Insbesondere kann die Außenfläche des mindestens einen Halteschenkelelements in einer, vorzugsweise jeder, Imaginärebene bzw. Querschnittsebene, welche senkrecht zu der Zentralachse ist und die Außenfläche schneidet, im Wesentlichen teilkreisartig mit einem ersten Radius ausgebildet sein, wobei der erste Radius geringer ist als ein maximaler Abstand zwischen der Außenfläche und der Zentralachse in der jeweiligen Imaginärebene. Der maximale Abstand kann als ein größter Abstand zwischen den Punkten der Außenfläche in der Imaginärebene und einem Durchstoßpunkt der Zentralachse in der Imaginärebene verstanden werden. Hierdurch kann insbesondere ermöglicht werden, dass die jeweilige Außenfläche in der Imaginärebene eine größere Krümmung aufweist, als ein Kreis mit einem Radius, der dem maximalen Abstand entspricht. Hierdurch kann insbesondere ein Abrieb zwischen der Außenfläche und beispielsweise einer Überwurfmutter bzw. Kompressionsmutter vermieden bzw. reduziert werden.

Insbesondere kann das mindestens eine Halteschenkelelement zwei oder mehr Halteschenkelelemente umfassen, wobei mindestens zwei der mindestens zwei Halteschenkelelemente unterschiedlich von der Zentralachse beabstandet sind. In anderen Worten kann ein erstes Halteschenkelelement der mindestens zwei Halteschenkelelemente einen ersten maximalen Abstand zwischen der Außenfläche, insbesondere zwischen dem mindestens einen Aufdruckbereich, des ersten Halteschenkelelements aufweisen, und ein zweites Halteschenkelelement der mindestens zwei Halteschenkelelemente kann einen zweiten maximalen Abstand zwischen der Außenfläche, insbesondere zwischen dem mindestens einen Aufdruckbereich, des zweiten Halteschenkelelements aufweisen, wobei der erste maximale Abstand einen unterschiedlichen Wert als der zweite maximale Abstand hat. Hierdurch kann insbesondere eine Aufnahme bzw. ein Halten eines Kabelabschnitts mit einem im Wesentlichen nicht-kreisrunden Querschnitt, beispielsweise einem ovalen Querschnitt, in bzw. an der Kabelhaltevorrichtung ermöglicht werden. Insbesondere kann hierdurch ferner ermöglicht werden, dass das erste Halteschenkelelement in dem Betriebszustand einen anderen Druck auf den Kabelabschnitt ausübt als das zweite Kabelhalteelement. Somit kann durch eine solche Ausgestaltung der mindestens zwei Halteschenkelelement eine angepasste Druckausübung auf den Kabelabschnitt in dem Betriebszustand ermöglicht werden.

Der Verbinder kann insbesondere ferner mindestens eine Schutzeinrichtung umfassen. Die mindestens eine Schutzeinrichtung kann hierbei insbesondere zumindest an dem mindestens einen Aufdruckbereich und/oder an der kegelstumpfartigen Innenfläche angeordnet bzw. anordenbar ausgebildet sein, wobei die mindestens eine Schutzeinrichtung vorzugsweise ausgelegt ist, in dem Betriebszustand zwischen dem mindestens einen Aufdruckbereich und der kegelstumpfartigen Innenfläche angeordnet zu sein. Hierdurch kann insbesondere der mindestens eine Aufdruckbereich und/oder die kegelstumpfartige Innenfläche vor mechanischen Beschädigungen geschützt werden.

Die mindestens eine Schutzeinrichtung kann hierbei insbesondere eine erste Schutzeinrichtung aufweisen, wobei die erste Schutzeinrichtung zumindest an mindestens einem Aufdruckbereich, vorzugsweise an allen Aufdruckbereichen, des mindestens einen Halteschenkelelements angeordnet bzw. anordenbar ausgebildet ist. Die erste Schutzeinrichtung kann hierbei insbesondere ausgelegt sein, um einen Abrieb von Material von dem mindestens einen Aufdruckbereich, vorzugsweise von allen Aufdruckbereichen, zu verhindern bzw. zu reduzieren. Die erste Schutzeinrichtung kann hierzu beispielsweise einen geringeren Reibungskoeffizienten, vorzugsweise insbesondere einen geringeren Haftreibungs-Reibungskoeffizienten und/oder einen geringeren Gleitreibungs-Reibungskoeffizienten aufweisen als der mindestens eine Aufdruckbereich. Die erste Schutzeinrichtung kann insbesondere mindestens einen ersten Schutzfilm aufweisen und/oder als mindestens ein erster Schutzfilm ausgebildet sein, wobei der mindestens eine erste Schutzfilm an bzw. auf dem mindestens einen Aufdruckbereich angeordnet bzw. ausgebildet ist. Der mindestens eine erste Schutzfilm kann beispielsweise einen Gleitlackfilm umfassen bzw. sein. Die erste Schutzeinrichtung kann insbesondere mindestens einen ersten Schutzeinleger umfassen und/oder als mindestens ein erster Schutzeinleger ausgebildet sein, wobei der mindestens eine erste Schutzeinleger insbesondere an dem mindestens einen Aufdruckbereich anordenbar bzw. befestigbar ausgebildet ist. Der mindestens eine erste Schutzeinleger kann insbesondere ausgebildet sein, um die Zentralachse zumindest teilweise, vorzugsweise vollständig, in dem Betriebszustand zu umschließen. Die erste Schutzeinrichtung ist hierbei nicht auf eine solche Ausgestaltung beschränkt, und kann beispielsweise auf bzw. an weiteren Flächen bzw. Teilen der Kabelhaltevorrichtung ausgebildet sein. Die erste Schutzeinrichtung kann insbesondere aus einem Isolatormaterial bzw. einem elektrisch isolierenden Material ausgebildet sein.

Die mindestens eine Schutzeinrichtung kann hierbei insbesondere eine zweite Schutzeinrichtung aufweisen, wobei die zweite Schutzeinrichtung zumindest teilweise, vorzugsweise vollständig, an der kegelstumpfartigen Innenfläche angeordnet bzw. anordenbar ausgebildet ist. Die zweite Schutzeinrichtung kann hierbei insbesondere ausgelegt sein, um einen Abrieb von Material von der kegelstumpfartigen Innenfläche zu verhindern bzw. zu reduzieren. Die zweite Schutzeinrichtung kann hierzu beispielsweise einen geringeren Reibungskoeffizienten, vorzugsweise insbesondere einen geringeren Haftreibungs-Reibungskoeffizienten und/oder einen geringeren Gleitreibungs-Reibungskoeffizienten aufweisen als die kegelstumpfartige Innenfläche. Die zweite Schutzeinrichtung kann insbesondere mindestens einen zweiten Schutzfilm aufweisen und/oder als mindestens ein zweiter Schutzfilm ausgebildet sein, wobei der mindestens eine zweite Schutzfilm an bzw. auf der kegelstumpfartigen Innenfläche angeordnet bzw. ausgebildet ist. Der mindestens eine zweite Schutzfilm kann beispielsweise einen Gleitlackfilm umfassen. Die zweite Schutzeinrichtung kann insbesondere mindestens einen zweiten Schutzeinleger umfassen und/oder als mindestens ein zweiter Schutzeinleger ausgebildet sein, wobei der mindestens eine zweite Schutzeinleger insbesondere an der kegelstumpfartigen Innenfläche anordenbar bzw. befestigbar ausgebildet ist. Der mindestens eine zweite Schutzeinleger kann insbesondere ausgebildet sein, um die Zentralachse zumindest teilweise, vorzugsweise vollständig, in dem Betriebszustand zu umschließen. Die zweite Schutzeinrichtung ist hierbei nicht auf eine solche Ausgestaltung beschränkt, und kann beispielsweise auf bzw. an weiteren Flächen bzw. Teilen des Kompressionselements ausgebildet sein. Die zweite Schutzeinrichtung kann insbesondere aus einem Isolatormaterial bzw. einem elektrisch isolierenden Material ausgebildet sein.

Die mindestens eine erste Schutzeinrichtung und/oder die mindestens eine zweite Schutzeinrichtung kann insbesondere ausgebildet sein, dass eine Haftreibung und/oder eine Gleitreibung zwischen der mindestens einen ersten Schutzeinrichtung und/oder der mindestens einen zweiten Schutzeinrichtung und dem mindestens einen Aufdruckbereich und/oder zwischen der mindestens einen ersten Schutzeinrichtung und/oder der mindestens einen zweiten Schutzeinrichtung und dem Kompressionselement bzw. der kegelstumpfartigen Innenfläche geringer ist als zwischen dem mindestens einen Aufdruckbereich und dem Kompressionselement bzw. der kegelstumpfartigen Innenfläche.

Ein Aspekt betrifft eine Verwendung eines Verbinders zum Aufnehmen eines Kabelabschnitts eines Kabels in dem Verbinder. Der Verbinder kann hierbei insbesondere eine beliebige Kombination der Merkmale des in der Beschreibung beschriebenen und/oder in den Figuren gezeigten Verbinders aufweisen.

Ein Aspekt betrifft ein Verfahren zur Herstellung eines Verbinder zur Aufnahme eines Kabelabschnitts eines Kabels. Das Verfahren umfasst insbesondere ein Herstellen einer Kabelhaltevorrichtung, wobei die Kabelhaltevorrichtung insbesondere ausgelegt ist, den Kabelabschnitt in umlaufender Richtung bezüglich einer Zentralachse der Kabelhaltevorrichtung zumindest teilweise, vorzugsweise vollständig zu umschließen.

Das Herstellen der Kabelhaltevorrichtung umfasst insbesondere ein Ausbilden mindestens eines Halteschenkelelements. Jedes Halteschenkelelement kann hierbei vorzugsweise zumindest teilweise mechanisch, insbesondere zumindest teilweise elastisch, verlagerbar ausgebildet sein, um mit dem Kabelabschnitt in Eingriff zu gelangen und/oder den Kabelabschnitt an der Kabelhaltevorrichtung zu halten bzw. zu befestigen. Das mindestens eine Halteschenkelelement kann hierbei vorzugsweise zumindest teilweise verlagerbar, beispielsweise durch eine Kipp-Bewegung des mindestens einen Halteschenkelelements, entlang einer radialen Richtung bezüglich der Zentralachse ausgebildet sein.

Jedes Halteschenkelelement des mindestens einen Halteschenkelelements weist insbesondere eine Außenfläche auf. Insbesondere umfasst das Ausbilden eines Halteschenkelelements ein Ausbilden der jeweiligen Außenfläche. Die Außenfläche kann hierbei als eine Oberfläche ausgebildet sein, welche auf einer in radialer Richtung bezüglich der Zentralachse abgewandten Seite des jeweiligen Halteschenkelelements angeordnet bzw. ausgebildet ist.

Die Außenfläche des jeweiligen Halteschenkelelements kann insbesondere mindestens zwei druckfreie Bereiche und mindestens einen Aufdruckbereich umfassen, wobei der mindestens eine Aufdruckbereich zwischen mindestens zwei druckfreien Bereichen der mindestens zwei druckfreien Bereiche angeordnet ist. Insbesondere kann der zumindest bzw. mindestens eine Aufdruckbereich zwischen mindestens zwei druckfreien Bereichen der zumindest bzw. mindestens zwei druckfreien Bereiche entlang der umlaufenden Richtung um die bzw. bezüglich der Zentralachse angeordnet sein. Mit anderen Worten, der zumindest bzw. mindestens eine Aufdruckbereich und die mindestens zwei druckfreien Bereiche können bevorzugt nacheinander entlang der umlaufenden Richtung angeordnet sein, wobei der zumindest bzw. mindestens eine Aufdruckbereich zwischen den mindestens zwei druckfreien Bereichen angeordnet sein kann. Das mindestens eine Halteschenkelelement ist insbesondere ausgebildet, durch eine, vorzugsweise im Wesentlichen radial nach innen bezüglich der Zentralachse, auf die Außenfläche, insbesondere auf den mindestens einen Aufdruckbereich, gerichtete Kraft, vorzugsweise zumindest teilweise elastisch, entlang einer radialen Richtung bezüglich der Zentralachse verlagerbar zu sein, um den Kabelabschnitt an der Kabelhaltevorrichtung zu halten.

Das Ausbilden des mindestens einen Halteschenkelelements kann vorzugsweise ein Formfräsen der Außenfläche des mindestens einen Halteschenkelelements umfassen. Vorzugsweise ist das Formfräsen insbesondere ein Leitkurvenfräsen, wobei ein Formfräsewerkzeug bzw. ein Formfräsekopf entlang einer Leitkurve in umlaufender Richtung um die Zentralachse bewegt wird, um die mindestens eine Außenfläche auszubilden. Hierdurch kann eine effiziente und einfache Ausbildung des mindestens einen Halteschenkelelements bzw. des Verbinders ermöglicht werden.

Die Leitkurve kann insbesondere an eine gewünschte Krümmung der Außenfläche bzw. der Außenflächen des mindestens einen Halteschenkelelements angepasst sein. Insbesondere kann die Leitkurve eine Vielzahl von Leitkurvensegmenten aufweisen, wobei eine Anzahl der Leitkurvensegmente insbesondere mindestens einer Anzahl von auszubildenden Halteschenkelelementen entsprechen kann. Insbesondere kann eine Krümmung eines Leitkurvensegments in einem Punkt, vorzugsweise jedes Punktes, mit Ausnahme der beiden Endpunkte des jeweiligen Leitkurvensegments größer sein als eine Krümmung eines Kreises mit einem Radius, der dem Abstand zwischen dem entsprechenden Punkt und der Zentralachse der Kabelhaltevorrichtung in einer entsprechenden Querschnittsebene entspricht.

Der Verbinder bzw. das Verfahren zur Herstellung des Verbinders kann hierbei insbesondere eine beliebige Kombination der Merkmale des in der Beschreibung beschriebenen und/oder in den Figuren gezeigten Verbinders aufweisen.

Exemplarische, illustrative Ausführungsformen der Erfindung werden in den Figuren gezeigt und nachfolgend weiter erläutert. Die Figuren und die entsprechende Figurenbeschreibung dienen jedoch der Beschreibung weiterer bevorzugter Ausführungsform, und sind somit nicht als beschränkend für den Umfang der Offenbarung zu interpretieren. Es zeigen:
- **Figur 1:**: eine perspektivische Ansicht einer exemplarischen Kabelhaltevorrichtung;
- **Figur 2:**: eine Querschnittsansicht der Kabelhaltevorrichtung aus Figur 1;
- **Figur 3:**: eine perspektivische Ansicht entlang der Zentralachse auf die Kabelhaltevorrichtung aus Figuren 1 und 2;
- **Figur 4:**: eine Querschnittsansicht eines exemplarischen Kompressionselements;
- **Figur 5:**: eine Querschnittsansicht eines exemplarischen Kompressionselements und einer exemplarischen Kabelhaltevorrichtung;
- **Figur 6A und 6B:**: jeweils eine Querschnittsansicht einer herkömmlichen Kompressionsmanschette und einer herkömmlichen Überwufmutter;
- **Figur 6C:**: ein Foto eines Versuchsergebnisses mit einer Kompressionsmanschette und einer Überwurfmutter
- **Figur 7A und 7B:**: gemäß Figuren 6A und 6B; jeweils eine Querschnittsansicht einer exemplarischen Kabelhaltevorrichtung und eines exemplarischen Kompressionselements;
- **Figur 8:**: eine perspektivische Ansicht einer exemplarischen Kabelhaltevorrichtung und eines exemplarischen Verbinderkörpers;
- **Figur 9:**: eine Querschnittsansicht des Ausführungsbeispiels aus Figur 8;
- **Figur 10:**: eine perspektivische Ansicht einer exemplarischen Kabelhaltevorrichtung und eines exemplarischen Verbinderkörpers;
- **Figur 11:**: perspektivische Ansicht des Ausführungsbeispiels aus Figur 10 mit einem exemplarischen Kompressionselements;
- **Figur 12:**: eine Querschnittsansicht des Ausführungsbeispiels aus Figur 11;
- **Figur 13:**: eine perspektivische Ansicht des Ausführungsbeispiels aus Figur 11 mit einem exemplarischen Außenelement;
- **Figur 14:**: einen Ausschnitt einer Querschnittsansicht eines exemplarischen Verbinders mit einer exemplarischen Schutzeinrichtung;
- **Figur 15:**: einen Ausschnitt einer perspektivischen Ansicht einer exemplarischen Kabelhaltevorrichtung während deren Herstellung;
- **Figur 16:**: eine perspektivische Querschnittsansicht des Ausführungsbeispiels aus Figur 15; und
- **Figur 17A bis 17K:**: eine Reihe von Versuchsergebnissen von Versuchen im Rahmen der Erfindung.

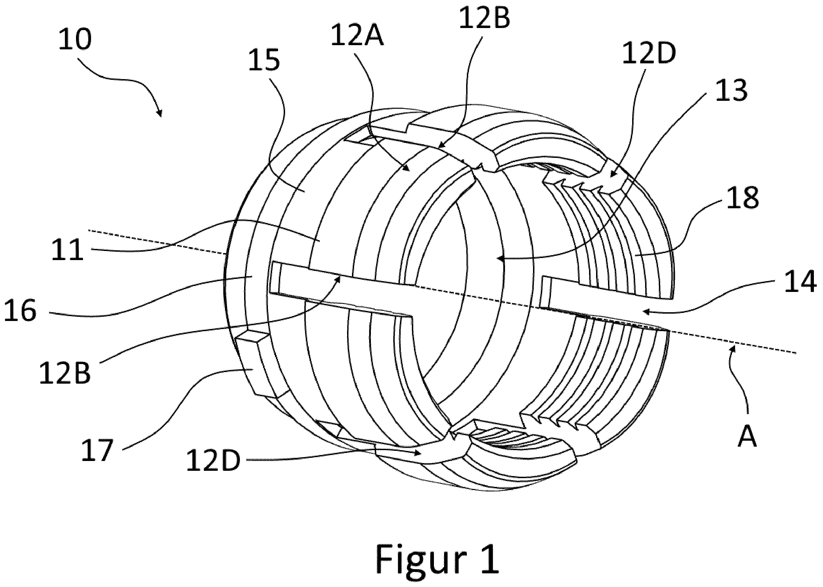

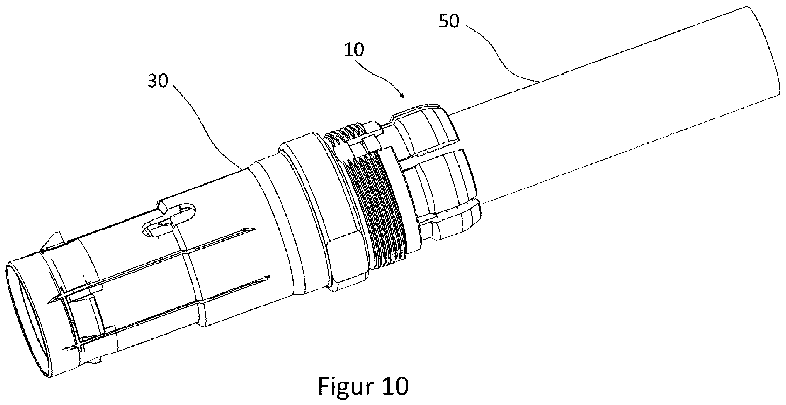

**Figur 1** zeigt eine perspektivische Ansicht einer exemplarischen Kabelhaltevorrichtung **10**. Die Kabelhaltevorrichtung **10** ist insbesondere ausgelegt, einen Kabelabschnitt **50** (nicht gezeigt, siehe z.B. Figur 10) in umlaufender Richtung bezüglich einer Zentralachse **A** der Kabelhaltevorrichtung **10** vollständig zu umschließen. Die Kabelhaltevorrichtung **10** ist hierbei zumindest teilweise hohlzylinderartig ausgebildet, wobei die Zentralachse **A** im Wesentlichen einer Zentralachse eines entsprechenden Hohlzylinders entspricht. Die exemplarische Kabelhaltevorrichtung **10** kann hierbei insbesondere eine Kabelabschnittaufnahme **13** aufweisen.

Die Kabelhaltevorrichtung **10** weist insbesondere mindestens ein Halteschenkelelement **11** auf, wobei die gezeigte exemplarische Kabelhaltevorrichtung **10** hierbei sechs Halteschenkelelemente **11** aufweist. Jedes der Halteschenkelelemente **11** ist hierbei zumindest teilweise elastisch verlagerbar ausgebildet, um mit dem Kabelabschnitt **50** in Eingriff zu gelangen und/oder den Kabelabschnitt **50** an der Kabelhaltevorrichtung **10** zu halten bzw. zu befestigen. Jedes der Halteschenkelelemente **11** ist hierbei z.B. durch eine Kipp-Bewegung des jeweiligen Halteschenkelelements **11** entlang einer radialen Richtung bezüglich der Zentralachse **A** verlagerbar ausgebildet.

Die exemplarische Kabelhaltevorrichtung **10** weist ferner insbesondere einen hohlzylinderartigen Abschnitt **16** auf, wobei der hohlzylinderartige Abschnitt **16** ausgebildet ist, in dem Betriebszustand den Kabelabschnitt **50** in einer umlaufenden Richtung bezüglich der Zentralachse **A** vollständig zu umschließen. Jedes Halteschenkelelement **11** weist insbesondere ein befestigtes Ende **15** und ein freies Ende auf. Das befestigte Ende **15** ist hierbei insbesondere mit dem hohlzylinderartigen Abschnitt **16** einstückig ausgebildet. Das freie Ende ist hierbei insbesondere elastisch verlagerbar bezüglich dem mindestens einen befestigten Ende **15** und bezüglich der Zentralachse **A** ausgebildet. Insbesondere ist hierbei somit jedes Halteschenkelelement **11** einstückig mit dem hohlzylinderartigen Abschnitt **16** ausgebildet.

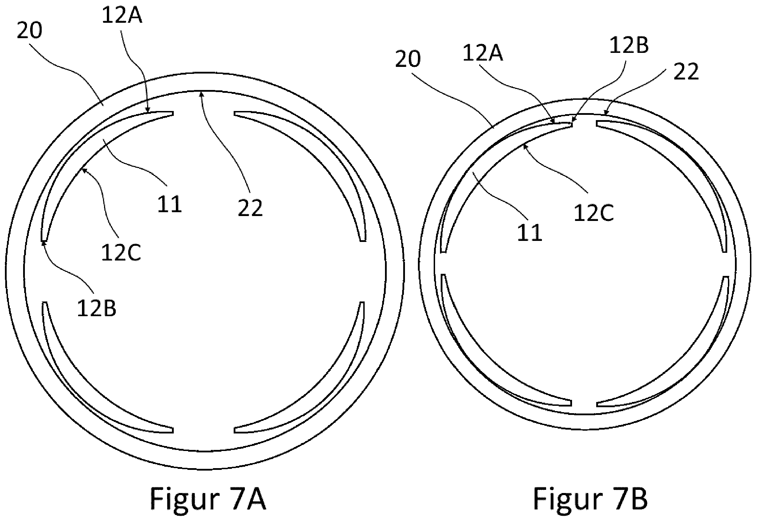

Jedes Halteschenkelelement **11** weist insbesondere eine Außenfläche **12A** auf, welche auf einer in radialer Richtung bezüglich der Zentralachse **A** abgewandten Seite des jeweiligen Halteschenkelelements **11** angeordnet bzw. ausgebildet ist. Jedes Halteschenkelelement **11** weist ferner eine Innenfläche **12C** (siehe insbesondere Figuren 7A und 7B) auf, welche auf einer in radialer Richtung bezüglich der Zentralachse **A** zugewandten Seite des jeweiligen Halteschenkelelements **11** angeordnet ist. Jedes exemplarische Halteschenkelelement **11** weist ferner zwei Seitenflächen **12D** auf, welche zwischen der Außenfläche **12A** und der Innenfläche **12C** angeordnet sind und/oder an die Außenfläche **12A** und an die Innenfläche **12C** angrenzen, um die Außenfläche **12A** und die Innenfläche **12C** zu verbinden. Das mindestens eine Halteschenkelelement **11** ist jedoch nicht hierauf beschränkt, sondern kann beispielsweise auch ohne Seitenflächen **12D** ausgebildet sein. Insbesondere weist jedes Halteschenkelelement **11** zwei Randbereiche **12B** auf, welche jeweils einen Angrenzungsbereich zwischen Außenfläche **12A** und den Seitenflächen **12D** bilden.

Die Außenfläche **12A** eines jeweiligen Halteschenkelelements **11** weist insbesondere mindestens zwei druckfreie Bereiche und mindestens einen Aufdruckbereich auf, wobei der mindestens eine Aufdruckbereich zwischen mindestens zwei druckfreien Bereichen der mindestens zwei druckfreien Bereiche angeordnet ist. Dies wird insbesondere ferner in Figuren 7A und 7B exemplarisch gezeigt. Insbesondere umfassen zwei der mindestens zwei druckfreien Bereiche der Außenfläche **12A** die Randbereiche **12B** bzw. grenzen an die Randbereiche **12B** an.

Jeweils zwei der sechs exemplarischen Halteschenkelelemente **11** sind insbesondere zumindest teilweise einander gegenüberliegend bezüglich der Zentralachse A angeordnet bzw. ausgebildet. Ferner sind die sechs exemplarischen Halteschenkelelemente **11** insbesondere im Wesentlichen formgleich zueinander ausgebildet. Ferner sind die sechs exemplarischen Halteschenkelelemente **11** insbesondere im Wesentlich gleich beabstandet in umlaufender Richtung bezüglich der Zentralachse A angeordnet. Zwischen jeweils zwei in umlaufender Richtung benachbarten Halteschenkelelementen **11** ist hierbei insbesondere eine Beabstandungsaussparung **14** ausgebildet. Insbesondere kann eine jeweilige Beabstandungsaussparung **14** beispielsweise durch zumindest zwei Seitenflächen **12D** der angrenzenden bzw. benachbarten Halteschenkelelemente **11** begrenzt sein, wobei die besagten zumindest zwei Seitenflächen **12D** vorzugsweise im Wesentlichen parallel ausgebildet sein können. Die zumindest zwei Seitenflächen **12D** sind jedoch nicht hierauf beschränkt, und können anderweitig zueinander ausgerichtet sein. Insbesondere kann zumindest ein Halteschenkelelement **11** der zwei benachbarten Halteschenkelelemente **11** keine Seitenflächen **12D** aufweisen, wobei die Beabstandungsaussparung **14** hierbei insbesondere zumindest durch zwei Randbereiche **12B** der angrenzenden Halteschenkelelemente **11** begrenzt sein kann.

Insbesondere kann hierdurch ein gleichmäßiger und sicherer Halt des Kabelabschnitts **50** in bzw. an der Kabelhaltevorrichtung **10** ermöglicht werden.

Insbesondere kann mindestens ein, vorzugsweise jedes, der exemplarischen Halteschenkelelement **11** mindestens eine Halteeinrichtung **18** umfassen. Die mindestens eine Halteeinrichtung **18** ist hierbei insbesondere auf der Innenfläche **12C** des jeweiligen Halteschenkelelements **11** angeordnet bzw. ausgebildet. Die mindestens eine Halteeinrichtung **18** ist hierbei beispielsweise als mindestens eine Halterippe ausgebildet. Ein jeweiliges gezeigtes, exemplarisches Halteschenkelelement **11** umfasst hierbei insbesondere vier Halterippen. Die jeweiligen vier Halterippen sind hierbei insbesondere als eine erste Zugentlastungseinrichtung ausgebildet, wobei die erste Zugentlastungseinrichtung ausgelegt ist, in dem Betriebszustand eine Bewegung des Kabelabschnitts **50** entgegengesetzt zu einer Einführrichtung des Kabelabschnitts **50** im Wesentlichen parallel zu der Zentralachse **A** zu blockieren bzw. zu reduzieren.

Ferner ist insbesondere die Außenfläche **12A** jedes der sechs exemplarischen Halteschenkelelemente **11** zumindest teilweise im Wesentlichen kegelartig und/oder kegelstumpfartig ausgebildet. Die Außenfläche **12A** jedes der sechs exemplarischen Halteschenkelelemente **11** kann jedoch insbesondere mindestens eine Teilfläche aufweisen, welche eine andere Geometrie bzw. Form aufweist. Beispielsweise kann die Außenfläche **12A** jeder der sechs exemplarischen Halteschenkelelemente **11** beispielsweise mindestens eine im Wesentlichen zumindest zylinderartige Teilfläche aufweisen.

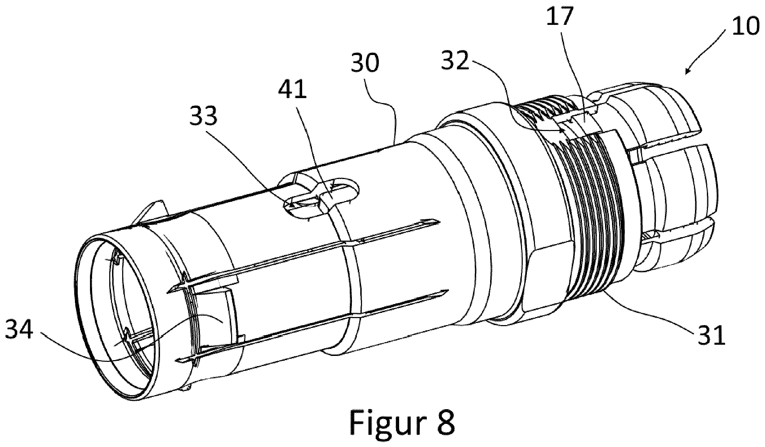

Die exemplarische, gezeigte Kabelhaltevorrichtung **10** weist ferner insbesondere eine erste Ausrichtungseinrichtung **17** auf, welche als Ausrichtungsvorsprung ausgebildet ist. Die Funktion der exemplarischen ersten Ausrichtungseinrichtung **17** wird ferner in Bezug auf Figur 8 beschrieben.

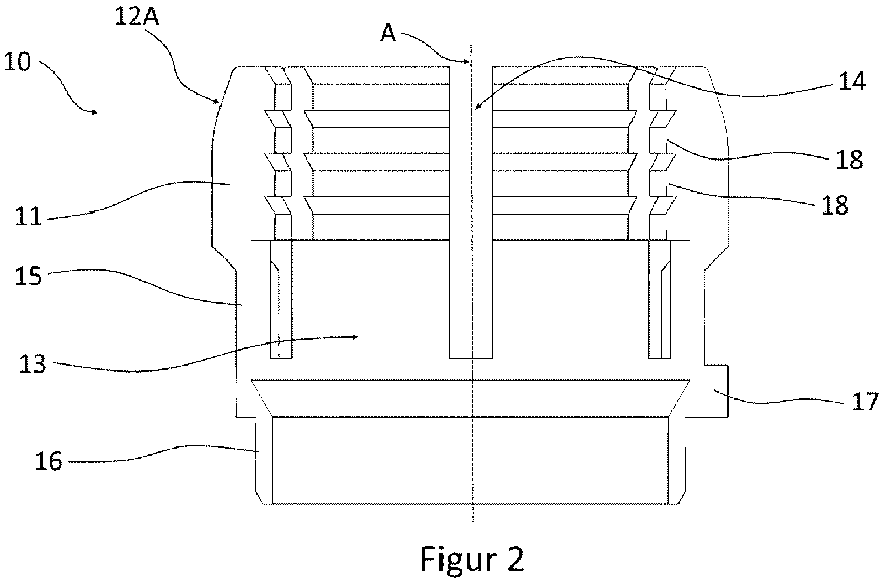

**Figur 2** zeigt eine Querschnittsansicht der Kabelhaltevorrichtung **10** gemäß Figur 1. Die Querschnittsansicht beruht hierbei auf einer Querschnittsebene, die insbesondere die Zentralachse **A** enthält und die erste Ausrichtungseinrichtung **17** schneidet.

Insbesondere kann ein befestigtes Ende **15** eines Halteschenkelelements **11** insbesondere zumindest teilweise hohlzylinderartig ausgebildet sein. Ferner kann mindestens ein Halteschenkelelement **11,** vorzugsweise jedes Halteschenkelelement **11,** des mindestens einen Halteschenkelelements **11** an dem jeweiligen freien Ende dicker senkrecht zur Zentralachse **A** als an dem befestigten Ende **15** ausgebildet sein. Insbesondere kann hierdurch ein Verlagern bzw. eine Kipp-Bewegung des jeweiligen Halteschenkelelements **11** vereinfacht werden.

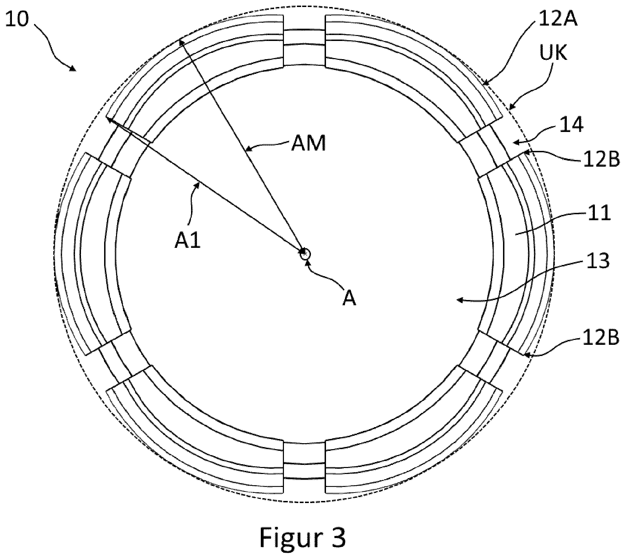

**Figur 3** zeigt eine perspektivische Sicht entlang der Zentralachse **A** auf die Kabelhaltevorrichtung **10** aus Figur 1.

Jedes Halteschenkelelement **11** kann insbesondere ausgebildet sein, dass ein Abstand der mindestens zwei druckfreien Bereiche von der Zentralachse **A** geringer ist als ein Abstand des mindestens einen Aufdruckbereichs von der Zentralachse. In der gezeigten, exemplarischen Kabelhaltevorrichtung **10** umfasst eine Außenfläche **12A** eines jeweiligen Hateschenkelelements **11** insbesondere einen Aufdruckbereich, welcher zentral zwischen den Randbereichen **12B** angeordnet ist, und zwei druckfreie Bereiche, welche den Bereich der Außenfläche **12A** zwischen dem Aufdruckbereich und dem jeweiligen Randbereich **12B** umfassen. Ein Abstand zwischen den zwei druckfreien Bereichen und der Zentralachse **A** ist hierbei exemplarisch als Abstand **A1** gezeigt. Ein Abstand zwischen dem Aufdruckbereich und der Zentralachse **A** ist hierbei exemplarisch als Abstand **AM** gezeigt. Insbesondere ist der Abstand **AM** jedes Punktes des Aufdruckbereichs von der Zentralachse **A** in der imaginären Ebene größer ein der Abstand **A1** jedes Punktes der zwei druckfreien Bereiche.

Insbesondere weist die jede der sechs Außenflächen **12A** in einer Querschnittsebene senkrecht zu der Zentralachse **A** eine erste Krümmung auf, wobei jede Außenfläche **12A** in der Querschnittsebene einen Maximal-Abstand der Außenfläche **12A** von der Zentralachse **A** aufweist. Der Maximal-Abstand entspricht für die exemplarisch gezeigte Kabelhaltevorrichtung **10** insbesondere dem Abstand **AM**. Die erste Krümmung ist hierbei insbesondere größer als eine zweite Krümmung eines Kreises mit einem Radius, der dem Maximal-Abstand entspricht. Der Kreis ist in dem gezeigten Beispiel als Umkreis **UK** illustriert, um den Unterschied zwischen der ersten Krümmung und der zweiten Krümmung darzustellen.

Insbesondere weist jede Außenfläche **12A** in mindestens einer, bevorzugt jeder, Querschnittsebene senkrecht zu der Zentralachse **A** mindestens einen entferntesten Punkt auf. Der mindestens eine entfernteste Punkt ist hierbei als mindestens ein Punkt der Außenfläche **12A** zu verstehen, welcher einen größten Abstand aller Punkte der Außenfläche **12A** in der Querschnittsebene zu dem Durchstoßpunkt der Zentralachse **A** in der Querschnittsebene aufweist. Der größte Abstand kann in dem gezeigten Beispiel insbesondere der Abstand **AM** sein. Mindestens eine, vorzugsweise jede der exemplarischen Außenflächen **12A** weist insbesondere in zumindest einem entferntesten Punkt des mindestens einen entferntesten Punktes eine Krümmung auf, welche größer ist als eine Krümmung eines Kreises mit einem Radius, der dem jeweiligen größten Abstand entspricht. Der Aufdruckbereich des jeweiligen Halteschenkelelements **11** umfasst insbesondere den mindestens einen entferntesten Punkt.

Insbesondere ist jede der gezeigten, exemplarischen Außenflächen **12A** eines jeweiligen Halteschenkelelements **11** in der Querschnittsebene Knick-frei bzw. Kanten-frei ausgebildet.

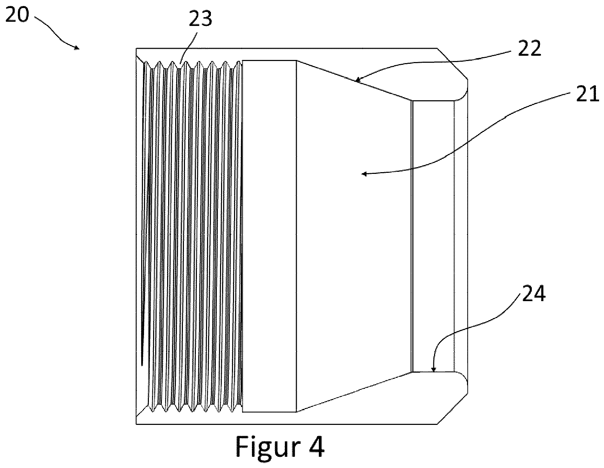

**Figur 4** zeigt eine Querschnitssansicht eines exemplarischen Kompressionselements **20**. Das Kompressionselement **20** ist hierbei mit der Kabelhaltevorrichtung **10** und/oder einem Verbinderkörper **30** (siehe Figur 8) verschraubbar ausgebildet, um durch ein solches Verschrauben zumindest teilweise eine im Wesentlichen radial nach innen bezüglich der Zentralachse **A** auf einen Aufdruckbereich eines Halteschenkelelements **11**, vorzugsweise mehrerer Halteschenkelelelemente **11**, noch mehr bevorzugt aller Halteschenkelelemente **11**, der Kabelhaltevorrichtung **10** gerichtete Kraft auszuüben bzw. zu bewirken, um das mindestens eine Halteschenkelelement **11** in Richtung der Zentralachse **A** zu verlagern, beispielsweise zu kippen. Das exemplarische Kompressionselement **20** weist insbesondere ein erstes Gewinde **23** auf, wobei das erste Gewinde **23** als ein Innengewinde ausgebildet ist. Das Kompressionselement **20** kann ferner insbesondere eine axiale Aufnahme **21** aufweisen, wobei die axial Aufnahme **21** insbesondere ausgelegt ist, eine Kabelhaltevorrichtung **10** zumindest teilweise aufzunehmen.

Das exemplarische Kompressionselement **20** weist ferner eine im Wesentlichen kegelstumpfartige Innenfläche **22** auf, wobei die kegelstumpfartige Innenfläche **22** ausgelegt ist, durch eine Verschraubung des Kompressionselements **20** mit der Kabelhaltevorrichtung **10** und/oder dem Verbinderkörper **30** einen Druck auf den mindestens einen Aufdruckbereich des mindestens einen Halteschenkelelements **11** auszuüben bzw. zu bewirken. Das exemplarische Kompressionselement **20** ist hierbei insbesondere als Kompressionsmutter bzw. als Überwurfmutter ausgebildet.

Das exemplarische Kompressionselement **20** weist ferner insbesondere eine zylinderartige Innenfläche **24** auf, welche an die kegelstumpfartige Innenfläche **22** angrenzt. Hierbei ist die kegelstumpfartige Innenfläche **22** zwischen dem ersten Gewinde **23** und der zylinderartigen Innenfläche **24** angeordnet bzw. ausgebildet.

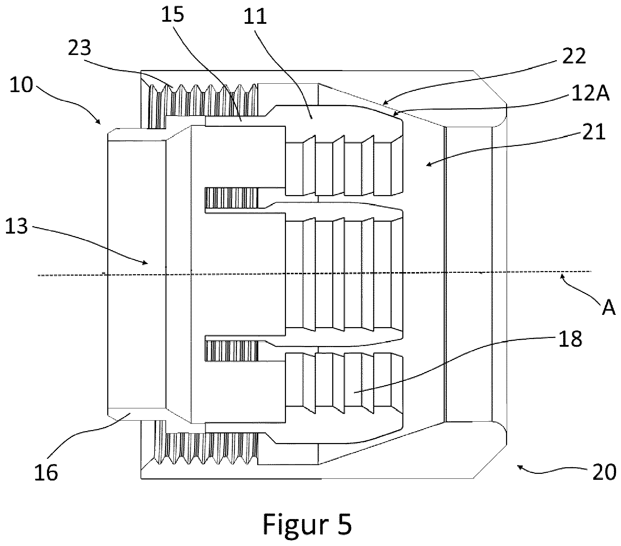

**Figur 5** zeigt eine Querschnittsansicht einer exemplarischen Kabelhaltevorrichtung **10** und eines Kompressionselements **20**. Die exemplarische Kabelhaltevorrichtung **10** entspricht hierbei insbesondere der exemplarischen Kabelhaltevorrichtung **10** aus Figuren 1 bis 3. Das exemplarische Kompressionselement **20** entspricht hierbei insbesondere der exemplarischen Kompressionselement **20** aus Figur **4**.

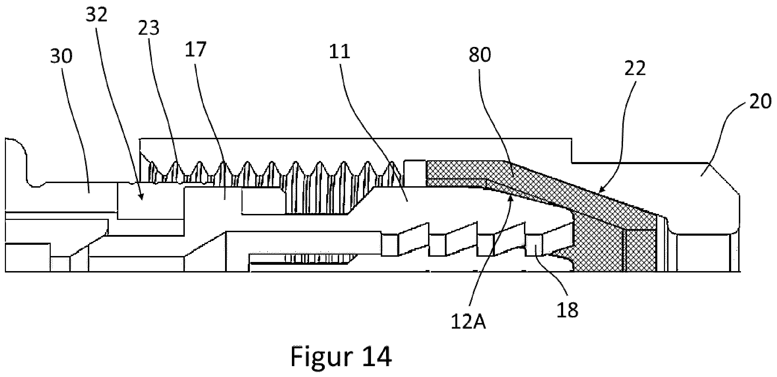

Das exemplarische Kompressionselement **20** ist hierbei insbesondere mit einem Verbinderkörper **30** (siehe Figur 8) verschraubbar ausgebildet, um durch Verschrauben des exemplarischen Kompressionselements **20** mit dem Verbinderkörper **30** in Richtung der Kabelhaltevorrichtung **10** verlagert zu werden. Die kegelstumpfartige Innenfläche **22** des Kompressionselements **20** kann hierbei insbesondere durch direkten Kontakt mit der mindestens einen Außenfläche **12A** des mindestens einen Halteschenkelelements 11, insbesondere dem mindestens einen Aufdruckbereich, oder durch indirekten Kontakt über ein oder mehrere Elemente (beispielsweise über eine Schutzeinrichtung **80**, siehe Figur 14) zwischen der mindestens einen Außenfläche **12A** bzw. dem mindestens einen Aufdruckbereich und der kegelstumpfartigen Innenfläche **22** einen Druck auf den mindestens einen Aufdruckbereich ausüben. Das exemplarische Kompressionselement **20** ist hierbei insbesondere ausgelegt, die Kabelhaltevorrichtung **10** insbesondere in einem Betriebszustand zumindest teilweise zu umschließen bzw. zu umgeben.

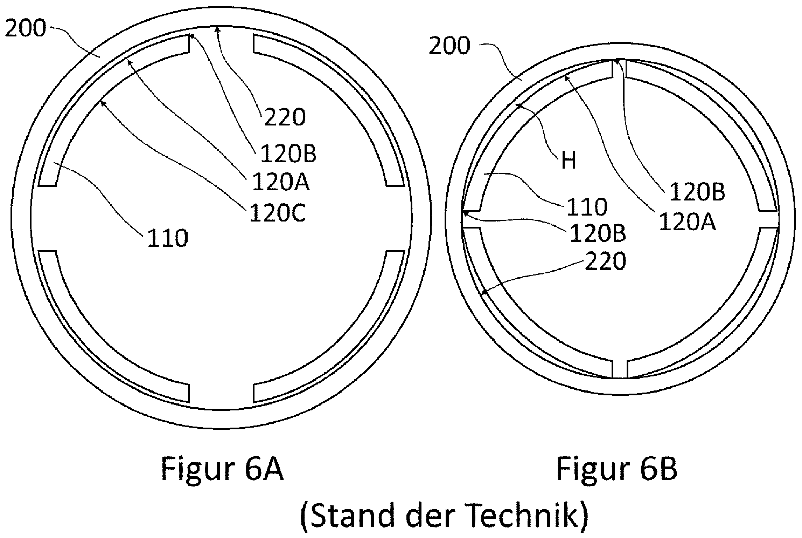

**Figur 6A** und **Figur 6B** zeigen insbesondere eine Querschnittsansicht einer herkömmlichen Kompressionsmanschette und einer herkömmlichen Überwurfmutter **200**. Die Kompressionsmanschette weist hierbei insbesondere vier Druckelemente **110** auf, wobei die Druckelemente **110** jeweils eine Außenfläche **120A**, eine Innenfläche **120C** und zwei Ränder **120B** aufweisen. Die Außenfläche **120A** ist hierbei durch die beiden Ränder **120B** in umlaufender Richtung um eine zentrale Achse der Kompressionsmanschette begrenzt. Ferner ist die Außenfläche **120A** in einem Zustand (siehe Figur 6A), in dem die Überwurfmutter **200** an der Kompressionsmanschette angeordnet ist ohne einen Druck auf die Außenfläche **120A** auszuüben, parallel zu einer Innenfläche der Überwurfmutter **200** ausgebildet.

Durch Verschrauben der Überwurfmutter **200** mit der Kompressionsmanschette, wird durch die Innenfläche der Überwurfmutter **200** ein Druck auf die Druckelemente **110** ausgeübt und die Kompressionsmanschette in einen komprimierten Zustand versetzt. Der komprimierte Zustand besteht hierbei insbesondere sowohl während dem Verschraubens, als auch in einem entsprechenden Betriebszustand. Wie in Figur 6B gut erkennbar ist, wird in dem komprimierten Zustand der Druck von der Überwurfmutter **200** aufgrund der Geometrie der Kompressionsmanschette bzw. der Druckelemente **110** ausschließlich auf die Ränder **120B** der Druckelemente **110** ausgeübt, wobei zwischen Außenfläche **120A** und der Überwurfmutter insbesondere ein Hohlraum **H** entsteht. Hierdurch üben die Ränder **120B** beim Verschrauben und beim Entschrauben der Überwurfmutter **200** eine Fräswirkung auf die Innenfläche der Überwurfmutter **200** aus, wodurch eine signifikante Beschädigung der Innenfläche bewirkt wird.

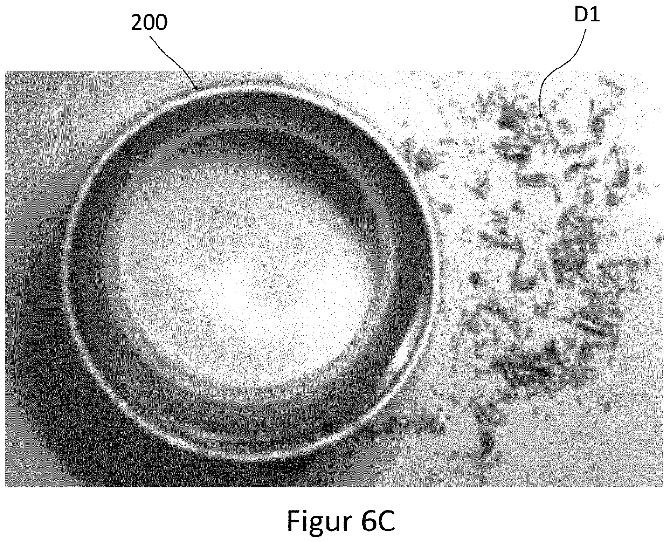

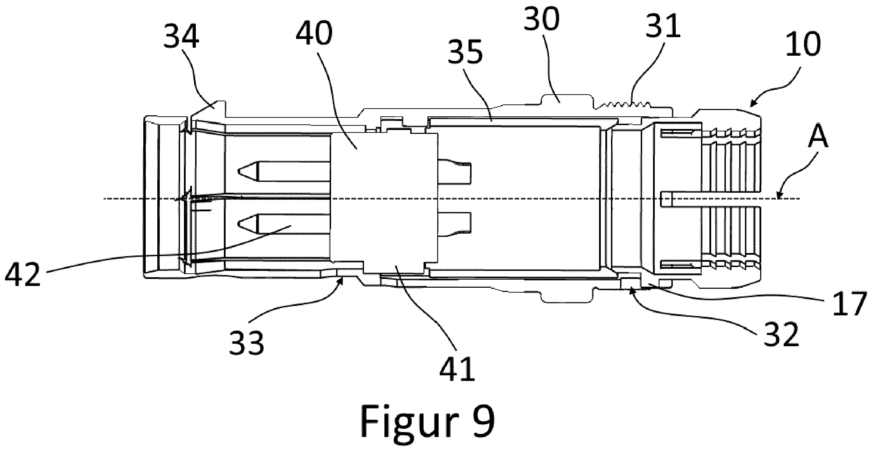

**Figur 6C** zeigt ein Foto eines Versuchsergebnisses mit einer Kombination aus einer Überwurfmutter **200** und einer herkömmlichen Kompressionsmanschette mit zwei oder mehr Druckelementen **110**, wie beispielsweise in Figuren 6A und 6B gezeigt. Hierbei ist deutlich ein signifikanter Abrieb **D1** von Material der Kompressionsmanschette und/oder der Überwurfmutter **200** zu erkennen. Aufgrund des Verlusts von Material ist die Lebensdauer der Überwurfmutter **200** und der Kompressionsmanschette deutlich begrenzt. Zudem kann der Abrieb in Kontakt mit mindestens einem Kontakt des Kabelabschnitts **50** und/oder mindestens einem Kontaktelement **42** (s. z.B. Figur 9) des Verbinders gelangen und somit einen Kurzschluß auslösen.

**Figur 7A** und **Figur 7B** zeigen insbesondere eine Querschnittsansicht einer exemplarischen Kabelhaltevorrichtung **10** und ein exemplarisches Kompressionselement **20**. Die Kabelhaltevorrichtung **10** weist hierbei insbesondere vier Halteschenkelelemente **11** auf, wobei die Halteschenkelelemente **11** jeweils eine Außenfläche **12A**, eine Innenfläche **12C** und zwei Randbereiche **12B** aufweisen. Die Außenfläche **12A** ist hierbei durch die beiden Randbereiche **12B** in umlaufender Richtung um eine Zentralachse **A** der Kabelhaltevorrichtung **10** begrenzt. Ferner ist die Außenfläche **12A** in einem Zustand (siehe Figur 7A), in dem das Kompressionselement **20** an der Kabelhaltevorrichtung **10** angeordnet ist ohne einen Druck auf die Außenfläche **12A** auszuüben, nicht parallel zu einer Innenfläche der Überwurfmutter **20** ausgebildet.

Durch Verschrauben des Kompressionselements **20** mit der Kabelhaltevorrichtung **10** und/oder dem Verbinderkörper **30**, wird durch die Innenfläche, insbesondere die kegelstumpfartige Innenfläche **22**, des Kompressionselements **20** ein Druck auf die Außenflächen **12A** der Halteschenkelelemte **11** ausgeübt und die Kabelhaltevorrichtung **10** in einen komprimierten Zustand versetzt. Der komprimierte Zustand besteht hierbei insbesondere sowohl während dem Verschraubens, als auch in dem Betriebszustand. Wie in Figur 7B gut erkennbar ist, wird in dem komprimierten Zustand der Druck von dem Kompressionselement **20** aufgrund der Geometrie der Kabelhaltevorrichtung **10** bzw. der Halteschenkelelemente **11** ausschließlich auf den Aufdruckbereich der Außenfläche **12A**, welcher insbesondere zwischen den beiden Randbereichen **12B** ausgebildet ist, und nicht auf die Randbereiche **12B** der Halteschenkelelemente **11** ausgeübt. Hierdurch wird insbesondere eine Fräswirkung bzw. Schabwirkung auf die Innenfläche, insbesondere die kegelstumpfartige Innenfläche **22**, des Kompressionselements **20** durch die Randbereiche **12B** beim Verschrauben und beim Entschrauben des Kompressionselements **20** verhindert bzw. vermieden bzw. reduziert.

Insbesondere ist die Außenfläche **12A** der vier exemplarischen Halteschenkelelement **11** in einer, vorzugsweise jeder, Imaginärebene bzw. Querschnittsebene, welche senkrecht zu der Zentralachse **A** ist und die Außenfläche **12A** schneidet, im Wesentlichen teilkreisartig mit einem ersten Radius ausgebildet. Der erste Radius ist hierbei insbesondere geringer als ein maximaler Abstand **AM** (siehe z.B. Figur 3) zwischen der Außenfläche **12A** und der Zentralachse **A** in der jeweiligen Imaginärebene.

Insbesondere kann die Innenfläche **12C** der vier exemplarischen Halteschenkelelement **11** in einer, vorzugsweise jeder, Imaginärebene bzw. Querschnittsebene, welche senkrecht zu der Zentralachse **A** ist und die Innenfläche **12C** schneidet, im Wesentlichen teilkreisartig mit einem zweiten Radius ausgebildet sein. Der zweite Radius kann hierbei insbesondere größer als der erste Radius ausgebildet sein. Der zweite Radius kann hierbei insbesondere größer als der erste Radius, aber geringer als der maximale Abstand **AM** ausgebildet sein.

**Figur 8** zeigt eine perspektivische Ansicht einer exemplarischen Kabelhaltevorrichtung **10** und eines exemplarischen Verbinderkörpers **30**, während **Figur 9** eine Querschnittsansicht der exemplarischen Kabelhaltevorrichtung **10** und des exemplarischen Verbinderkörpers **30** aus Figur 8 zeigt.

Der exemplarische Verbinderkörper **30** ist hierbei ausgelegt, den Kabelabschnitt **50** eines Kabels zumindest teilweise in einer Kabelaufnahme des Verbinderkörpers **30** aufzunehmen. Die Kabelaufnahme kann ferner ausgelegt sein, die Kabelhaltevorrichtung **10** zumindest teilweise aufzunehmen. Die exemplarische Kabelhaltevorrichtung **10** ist insbesondere an dem Verbinderkörper **30** anbringbar und/oder befestigbar ausgebildet. Die exemplarische Kabelhaltevorrichtung **10** weist insbesondere eine erste Ausrichtungseinrichtung **17** auf, welche beispielhaft als ein Ausrichtungsvorsprung ausgebildet ist. Der exemplarische Verbinderkörper **30** weist insbesondere eine zweite Ausrichtungseinrichtung **32** auf, welche beispielhaft als Ausrichtungsaussparung ausgebildet ist, wobei die erste Ausrichtungseinrichtung **17** mit der zweiten Ausrichtungseinrichtung **32** in Eingriff bringbar ausgebildet ist. Hierdurch wird insbesondere eine gewünschte bzw. benötigte Ausrichtung der Kabelhaltevorrichtung **10** relativ zu dem Verbinderkörper **30** ermöglicht. Ferner kann hierdurch eine ungewünschte, relative Verdrehung zwischen der Kabelhaltevorrichtung **10** und dem Verbinderkörper **30** vermieden bzw. blockiert werden.

Insbesondere kann die erste Ausrichtungseinrichtung **17** und/oder die zweite Ausrichtungseinrichtung **32** als jeweils eine Kodiereinrichtung ausgebildet sein, um ein Anbringen bzw. Befestigen einer Kabelhaltevorrichtung **10** an einem inkompatiblen Verbinderkörper **30** zu blockieren bzw. zu verhindern.

Der exemplarische Verbinderkörper **30** weist insbesondere ein drittes Gewinde **31** auf, wobei das dritte Gewinde **31** insbesondere als ein Außengewinde und mit dem ersten Gewinde **23** des Kompressionselements **20** verschraubbar ausgebildet ist.

Ein exemplarischer Verbinder **1** kann ferner einen Isolierkörper **40** und mindestens ein Kontaktelement **42** aufweisen, wobei der Isolierkörper **40** am Verbinderkörper **30** befestigbar bzw. anbringbar ausgebildet sein kann. Der Isolierkörper **40** kann ferner insbesondere ausgelegt sein, das mindestens eine Kontaktelement **42** zu halten und einen elektrischen Kontakt zwischen einem Kontaktelement **42** des mindestens einen Kontaktelements **42** und einem anderen Kontaktelement **42** des mindestens einen Kontaktelements **42** und/oder dem Verbinderkörper **30** und/oder der Kabelhaltevorrichtung **10** zu verhindern. Das mindestens eine Kontaktelement **42** kann insbesondere mit mindestens einem Kontakt des Kabelabschnitts **50** elektrisch verbindbar ausgebildet sein.

Der exemplarische Isolierkörper **40** weist insbesondere eine dritte Ausrichtungseinrichtung **41** auf, welche beispielhaft als ein Ausrichtungsvorsprung ausgebildet ist. Der exemplarische Verbinderkörper **30** weist insbesondere eine vierte Ausrichtungseinrichtung **33** auf, welche beispielhaft als Ausrichtungsaussparung ausgebildet ist, wobei die dritte Ausrichtungseinrichtung **41** mit der vierten Ausrichtungseinrichtung **33** in Eingriff bringbar ausgebildet ist. Hierdurch wird insbesondere eine gewünschte bzw. benötigte Ausrichtung des Isolierkörpers **40** relativ zu dem Verbinderkörper **30** ermöglicht. Ferner kann hierdurch eine ungewünschte, relative Verdrehung zwischen dem Isolierkörper **40** und dem Verbinderkörper **30** vermieden bzw. blockiert werden.

Ferner kann durch ein Vorsehen der ersten Ausrichtungseinrichtung **17**, der zweiten Ausrichtungseinrichtung **32**, der dritten Ausrichtungseinrichtung **41** und der vierten Ausrichtungseinrichtung **33** eine gewünschte bzw. benötigte Ausrichtung der Kabelhaltevorrichtung **10** relativ zu dem Isolierkörper **40** ermöglicht werden. Ferner kann hierdurch eine ungewünschte, relative Verdrehung zwischen dem Isolierkörper **40** und Kabelhaltevorrichtung **10** vermieden bzw. blockiert werden.

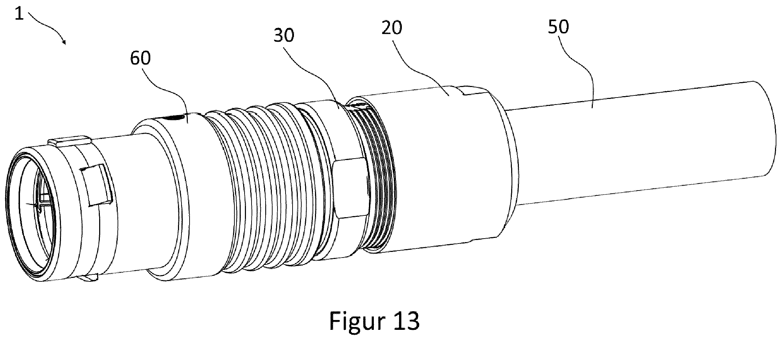

Der exemplarische Verbinderkörper **30** kann insbesondere ferner eine Befestigungseinrichtung **34** aufweisen. Die Befestigungseinrichtung **34** kann insbesondere ausgelegt sein, um ein oder mehrere Außenelemente **60** (siehe z.B. Figur 13) an dem Verbinderkörper **30** zu befestigen bzw. zu fixieren. Alternativ oder zusätzlich kann die Befestigungseinrichtung **34** ausgelegt sein, den Verbinder **1** bzw. den Verbinderkörper **30** an einem externen Element, beispielsweise eine Verbinder-Steckdose, zu befestigen. Die Befestigungseinrichtung **34** kann insbesondere mindestens ein Rastelement umfassen, welches ausgelegt ist, mit einem oder mehreren Außenelementen und/oder einem oder mehreren externen Elementen zu verrasten.

Der exemplarische Verbinderkörper **30** kann ferner ein Abstandselement **35** aufweisen. Das Abstandselement **35** kann hierbei insbesondere ausgelegt sein, eine Bewegung der Kabelhaltevorrichtung **10** entlang der Zentralachse **A**, insbesondere in Richtung des Isolierkörpers **40**, während eines Verschraubens des Kompressionselements **20** mit dem Verbinderkörper **30** zu blockieren bzw. zu verhindern. Das Abstandselelement **35** kann hierbei insbesondere zumindest teilweise hohlzylinderartig ausgebildet sein, wobei eine Zentralachse des Abstandselements im Betriebszustand insbesondere im Wesentlichen parallel, vorzugsweise im Wesentlichen identisch, ist mit der Zentralachse **A**. Das Abstandselelement **35** kann insbesondere mindestens ein Schalenelement, beispielsweise mindestens ein Halbschalenelement, aufweisen, wobei jedes Schalenelement zumindest teilweise hohlzylinderartig ausgebildet sein kann.

**Figur 10** zeigt eine perspektivische Ansicht einer exemplarischen Kabelhaltevorrichtung **10** mit einem exemplarischen Verbinderkörper **30**. Insbesondere ist hierbei ein Kabelabschnitt **50** eines Kabels in der Kabelhaltevorrichtung **10** und dem Verbinderkörper aufgenommen. Eine Achse des Kabelabschnitts **50** ist hierbei insbesondere im Wesentlichen identisch zu der Zentralachse **A**.

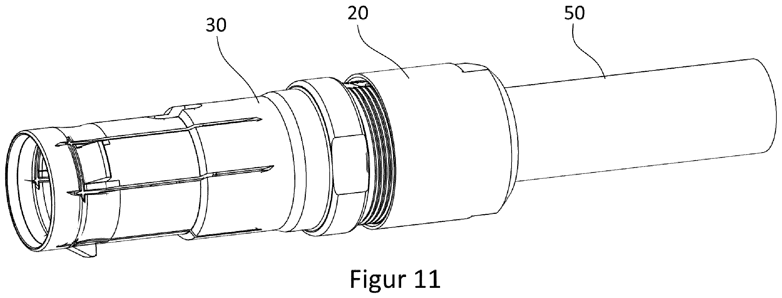

**Figur 11** zeigt eine perspektivische Ansicht des Verbinders **1** gemäß Figur 10 mit einem exemplarischen Kompressionselement **20**. Das Kompressionselement **20** ist hierbei insbesondere an dem Verbinderkörper **30** und der Kabelhaltevorrichtung **10** angeordnet.

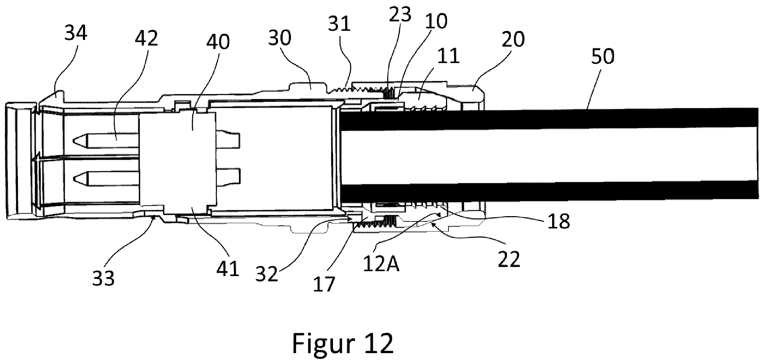

**Figur 12** zeigt eine Querschnittsansicht des Verbinders **1** gemäß Figur **11**. Hierbei ist der Kabelabschnitt **50** aus illustrativen Gründen nur als Kabelmantel dargestellt. Insbesondere kann hierbei durch Verschrauben des Kompressionselements **20** bzw. des ersten Gewindes **23** mit dem Verbinderkörper **30** bzw. dem dritten Gewinde **31** das Kompressionselement **20** insbesondere entlang der Zentralachse **A** in Richtung des Verbinderkörpers **30** verlagert werden, wodurch durch das Kompressionselement **20** ein Druck auf das mindestens eine Halteschenkelelement **11** ausgeübt wird, um das mindestens eine Halteschenkelelement **11** entlang einer radialen Richtung bezüglich der Zentralachse **A** nach innen zu verlagern bzw. zu kippen. Hierdurch kann das mindestens eine Halteschenkelelement **11**, insbesondere die mindestens eine Halteeinrichtung **18** des mindestens einen Halteschenkelelements **11** mit dem Kabelabschnitt **50** bzw. beispielsweise mit dem Kabelmantel des Kabelabschnitts **50** in Eingriff gebracht werden, um den Kabelabschnitt **50** an der Kabelhaltevorrichtung **10** zu halten.

**Figur 13** zeigt eine perspektivische Ansicht eines exemplarischen Verbinders **1**, wobei insbesondere ein Außenelement **60** an dem Verbinderkörper **30** befestigt bzw. fixiert ist. Das Außenelement **60** kann hierbei insbesondere durch die Befestigungseinrichtung **34** des Verbinderkörpers **30** an dem Verbinderkörper 30 befestigt bzw. fixiert sein. Das Außenelement **60** kann insbesondere beispielsweise als Schutzelement, z.B. als Schutzhülle vor mechanischen Beschädigungen und/oder als Schirmelement, ausgebildet sein.

**Figur 14** zeigt einen Ausschnitt aus einer Querschnittsansicht eines exemplarischen Verbinders **1** mit einem exemplarischen Kompressionselement **20** und einer exemplarischen Kabelhaltevorrichtung **10**. Der Verbinder **1** umfasst hierbei insbesondere ferner eine exemplarische Schutzeinrichtung **80**. Die Schutzeinrichtung **80** ist hierbei insbesondere zumindest an der kegelstumpfartigen Innenfläche **22** des Kompressionselements **20** angeordnet bzw. anordenbar ausgebildet, wobei die mindestens eine Schutzeinrichtung **80** ferner ausgelegt ist, in dem Betriebszustand zwischen dem mindestens einen Aufdruckbereich und der kegelstumpfartigen Innenfläche **22** angeordnet zu sein.

Die exemplarische Schutzeinrichtung **80** kann hierbei insbesondere ausgelegt sein, um einen Abrieb von Material von der kegelstumpfartigen Innenfläche **22** zu verhindern bzw. zu reduzieren. Die Schutzeinrichtung **80** kann hierzu beispielsweise einen geringeren Reibungskoeffizienten, vorzugsweise insbesondere einen geringeren Haftreibungs-Reibungskoeffizienten und/oder einen geringeren Gleitreibungs-Reibungskoeffizienten aufweisen als die kegelstumpfartige Innenfläche **22**. Die exemplarische Schutzeinrichtung **80** ist hierbei insbesondere als ein Schutzeinleger ausgebildet.

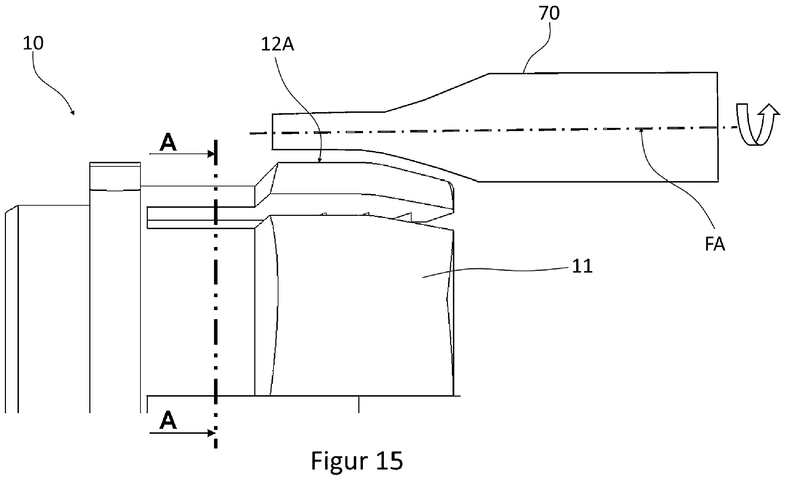

**Figur 15** zeigt einen Ausschnitt einer perspektivischen Ansicht einer exemplarischen Kabelhaltevorrichtung **10** während eines Herstellens eines exemplarischen Verbinders **1** bzw. während eines Herstellen der exemplarischen Kabelhaltevorrichtung **10**. Insbesondere zeigt Figur 15 hierbei einen Schritt des Ausbildens des mindestens einen Halteschenkelelements **11** bzw. einen Schritt des Ausbildens einer Außenfläche **12A** eines Halteschenkelelements des mindestens einen Halteschenkelelements **11**.

Insbesondere kann die Außenfläche **12A** hierbei durch ein Formfräßen ausgebildet werden. Ein Formfräsewerkzeug bzw. ein Formfräsekopf **70** rotiert hierbei um eine Fräseachse **FA**, und eine relative Bewegung zwischen Kabelhaltevorrichtung **10** und Formfräsekopf **70** wird erzeugt, um die Außenfläche **12A** auszubilden. Beispielsweise kann hierbei insbesondere die Kabelhaltevorrichtung **10** relativ zu einen stationär gehaltenen Formfräsekopf **70** bewegt werden oder der Formfräsekopf relativ zu einer stationär gehaltenen Kabelhaltevorrichtung **10** bewegt werden. Alternativ könnten jedoch beispielsweise auch sowohl der Formfräsekopf **70** und die Kabelhaltevorrichtung **10** bewegt werden, um durch eine entsprechende relative Bewegung die Außenfläche **12A** auszubilden.

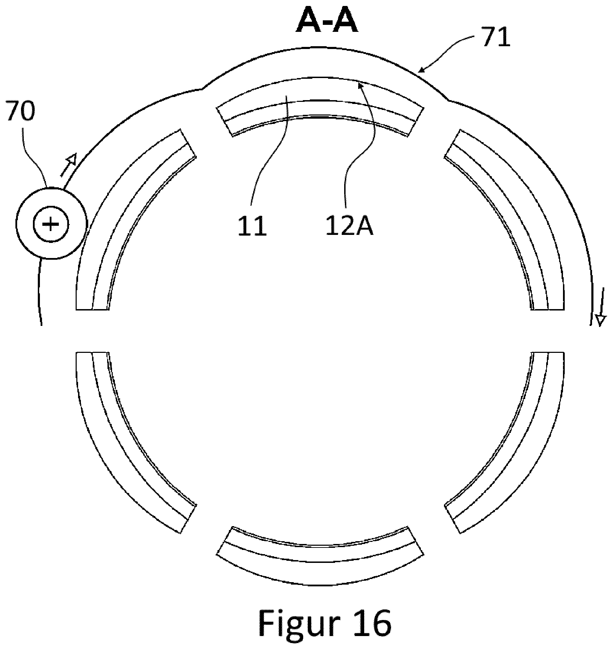

**Figur 16** zeigt eine perspektivische Querschnittsansicht entlang der Ebene A-A, wie in Figur 15 gezeigt.

In dem gezeigten Beispiel wird der Formfräsekopf relativ zu einer stationär gehaltenen Kabelhaltevorrichtung **10** gemäß einem Leitkurvenverfahren bewegt. Der Formfräsekopf **70** kann hierbei in einer umlaufenden Richtung um die Kabelhaltevorrichtung **10** bzw. um eine Zentralachse **A** (in Figur 16 nicht gezeigt) der Kabelhaltevorrichtung **10** entlang einer Leitkurve **71** bewegt. Die Leitkurve **71** kann hierbei im Wesentlichen in sich geschlossen sein, ist jedoch nicht hierauf beschränkt. Beispielsweise könnte die Leitkurve **71** im Wesentlichen spiralartig ausgelegt sein.

Bei einem herkömmlichen Formfräsen zur Ausbildung einer Außenfläche **120A** einer herkömmlichen Kompressionsmanschette ist die Leitkurve insbesondere im Wesentlichen kreisrund um die Kompressionsmanschette ausgebildet, bzw. weist eine solche Leitkurve im Wesentlichen die gleiche Krümmung entlang der besagten Leitkurve auf.

Bei dem exemplarischen Formfräsen, wie in Figur 16 gezeigt, ist die Leitkurve **71** an eine gewünschte Krümmung der Außenfläche **12A** bzw. der Außenflächen **12A** des mindestens einen Halteschenkelelements **11** angepasst. Insbesondere kann die Leitkurve **71** eine Vielzahl von Leitkurvensegmenten aufweisen, wobei eine Anzahl der Leitkurvensegmente insbesondere mindestens einer Anzahl von auszubildenden Halteschenkelelementen **11** entsprechen kann. Insbesondere kann eine Krümmung eines Leitkurvensegments in einem Punkt, vorzugsweise jedes Punktes, mit Ausnahme der beiden Endpunkte des jeweiligen Leitkurvensegments größer sein als eine Krümmung eines Kreises mit einem Radius, der dem Abstand zwischen dem entsprechenden Punkt und der Zentralachse **A** der Kabelhaltevorrichtung **10** in der entsprechenden Querschnittsebene entspricht. In dem gezeigten Beispiel in Figur 16 umfasst die teilweise gezeigte, exemplarische Leitkurve insbesondere mindestens drei Leitkurvensegmente.

Durch ein solchen Formfräsen bzw. Leitkurvenfräsen kann eine insbesonders effiziente, schnelle und einfache Ausbildung der Außenflächen **12A** ermöglicht werden.

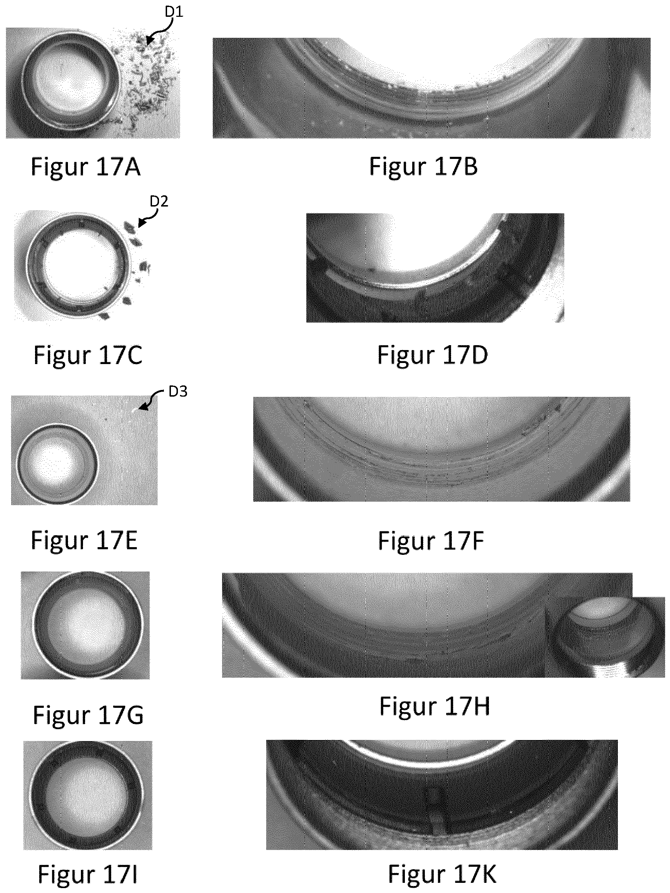

**Figuren 17A bis 17K** zeigen eine Reihe von Versuchsergebnissen mit unterschiedlich ausgebildeten Kompressionsmanschetten bzw. Kabelhaltevorrichtungen **10** und Überwurfmuttern bzw. Kompressionselementen **20**.

**Figur 17A** zeigt ein Foto eines Versuchsergebnisses mit einer Kombination aus einer herkömmlichen Überwurfmutter und einer herkömmlichen Kompressionsmanschette mit zwei oder mehr Kompressionsbügeln **110**, wie bereits in Figur 6C gezeigt. Hierbei ist deutlich ein signifikanter Abrieb **D1** von Material der Kompressionsmanschette und/oder der Überwurfmutter zu erkennen. **Figur 17B** zeigt eine Nahaufnahme der inneren Oberflächen der Überwurfmutter aus Figur 17A. Deutlich erkennbar ist hierbei der Schaden, der aufgrund des Abriebs **D1** hinterblieben ist.

**Figur 17C** zeigt ein Foto eines Versuchsergebnisses mit einer Kombination aus einer herkömmlichen Überwurfmutter und einer herkömmlichen Kompressionsmanschette mit zwei oder mehr Kompressionsbügeln **110**. Die Überwurfmutter entspricht hierbei im Wesentlichen der Überwurfmutter aus Figur 17A, wobei die Überwurfmutter aus Figur 17C zusätzlich ein internes Schutzelement aufweist, welches die Innenflächen der Überwurfmutter zumindest teilweise abdeckt. Hierbei ist trotz des Vorsehens des internen Schutzelements deutlich ein signifikanter Abrieb **D2** von Material der Kompressionsmanschette und/oder der Überwurfmutter zu erkennen. Der Abrieb **D2** ist hierbei jedoch insbesondere geringer als der Abrieb **D1**. **Figur 17D** zeigt eine Nahaufnahme der inneren Oberflächen der Überwurfmutter aus Figur 17C. Deutlich erkennbar ist hierbei der Schaden, insbesondere der Schaden an dem internen Schutzelement, der aufgrund des Abriebs **D2** hinterblieben ist.

**Figur 17E** zeigt ein Foto eines Versuchsergebnisses mit einer Kombination aus einem beispielhaften, erfindungsgemäßen Kompressionselement und einer beispielhaften, erfindungsgemäßen Kabelhaltevorrichtung mit zwei oder mehr Halteschenkelelementen. Insbesondere ist hierbei im Rahmen dieses Versuches keine Schutzeinrichtung an dem Kompressionselement und der Kabelhaltevorrichtung vorgesehen worden. Insbesondere ist ein sehr geringer Abrieb **D3** von Material des Kompressionselements und/oder der Kabelhaltevorrichtung zu erkennen, wobei der Abrieb **D3** deutlich geringer ist als jeweils der Abrieb **D1** und der Abrieb **D2**. **Figur 17F** zeigt eine Nahaufnahme der inneren Oberflächen des Kompressionselements aus Figur 17E. Im Vergleich zu den Figuren 17B und 17D ist hierbei ein deutlich geringerer Schaden an der Innenfläche, insbesondere an einem ersten Gewinde und an einer kegelstumpfartigen Innenfläche des Kompressionselements, zu erkennen.

**Figur 17G** zeigt ein Foto eines Versuchsergebnisses mit einer Kombination aus einem beispielhaften, erfindungsgemäßen Kompressionselement und einer beispielhaften, erfindungsgemäßen Kabelhaltevorrichtung mit zwei oder mehr Halteschenkelelementen. Insbesondere ist hierbei im Rahmen dieses Versuches eine Schutzeinrichtung zwischen dem Kompressionselement und der Kabelhaltevorrichtung vorgesehen worden, wobei die Schutzeinrichtung in diesem exemplarischen Fall als ein Gleitlack, insbesondere als ein Gleitlack an einer Innenfläche des Kompressionselements, vorzugsweise zumindest an einer kugelstumpfartigen Innenfläche des Kompressionselements, ausgebildet ist. Insbesondere ist kein signifikanter Abrieb von Material des Kompressionselements und/oder der Kabelhaltevorrichtung zu erkennen. **Figur 17H** zeigt eine Nahaufnahme der inneren Oberflächen des Kompressionselements aus Figur 17G. Im Vergleich zu den Figuren 17B, 17D und 17F ist hierbei ein deutlich geringerer Schaden an der Innenfläche, insbesondere an einem ersten Gewinde und an einer kegelstumpfartigen Innenfläche des Kompressionselements, zu erkennen.

**Figur 17I** zeigt ein Foto eines Versuchsergebnisses mit einer Kombination aus einem beispielhaften, erfindungsgemäßen Kompressionselement und einer beispielhaften, erfindungsgemäßen Kabelhaltevorrichtung mit zwei oder mehr Halteschenkelelementen. Insbesondere ist hierbei im Rahmen dieses Versuches eine Schutzeinrichtung zwischen dem Kompressionselement und der Kabelhaltevorrichtung vorgesehen worden, wobei die Schutzeinrichtung in diesem exemplarischen Fall als ein Schutzeinleger, insbesondere als ein Schutzeinleger an einer Innenfläche des Kompressionselements, vorzugsweise zumindest an einer kugelstumpfartigen Innenfläche des Kompressionselements, ausgebildet ist. Insbesondere ist kein Abrieb von Material des Kompressionselements und/oder der Kabelhaltevorrichtung und/oder dem Schutzeinleger zu erkennen. **Figur 17K** zeigt eine Nahaufnahme der inneren Oberflächen des Kompressionselements aus Figur 17I. Im Vergleich zu den Figuren 17B, 17D und 17F ist hierbei kein signifikanter Schaden an der Innenfläche, insbesondere an einem ersten Gewinde und an einer kegelstumpfartigen Innenfläche des Kompressionselements, zu erkennen. Insbesondere sind auch keine Schäden an dem Schutzeinleger erkennbar.

Die oben beschriebenen und/oder in den Figuren gezeigten Ausführungsformen sind nicht als beschränkend für die vorliegende Offenbarung zu interpretieren. Vielmehr kann ein Verbinder, eine Verwendung eines Verbinders und ein Verfahren zum Herstellen eines Verbinders eine beliebige Kombination der hierin beschriebenen und/oder in den Figuren gezeigten Merkmale aufweisen.

### Bezugszeichenliste

- **1**: Verbinder
- **10**: Kabelhaltevorrichtung
- **11**: Halteschenkelelement
- **12A**: Außenfläche
- **12B**: Randbereich
- **12C**: Innenfläche
- **12D**: Seitenfläche
- **13**: Kabelabschnittsaufnahme
- **14**: Beabstandungsaussparung
- **15**: befestigtes Ende
- **16**: hohlzylinderartiger Abschnitt
- **17**: erste Ausrichtungseinrichtung
- **18**: Halteeinrichtung
- **20**: Kompressioriselement
- **21**: axiale Aufnahme
- **22**: kegelstumpfartige Innenfläche
- **23**: erstes Gewinde
- **24**: zylinderartige Innenfläche
- **30**: Verbinderkörper
- **31**: drittes Gewinde
- **32**: zweite Ausrichtungseinrichtung
- **33**: vierte Ausrichtungseinrichtung
- **34**: Befestigungseinrichtung
- **35**: Abstandselement
- **40**: Isolierkörper
- **41**: dritte Ausrichtungseinrichtung
- **42**: Kontaktelement
- **50**: Kabelabschnitt
- **60**: Außenelement
- **70**: Formfräsekopf
- **71**: Leitkurve
- **80**: Schutzeinrichtung
- **110**: Druckelement
- **120A**: Außenfläche
- **120B**: Ränder
- **120C**: Innenfläche
- **200**: herkömmliche Überwurfmutter
- **A**: Zentralachse
- **A1, AM**: Abstand
- **D1, D2, D3**: Abrieb
- **FA**: Fräseachse
- **H**: Hohlraum
- **UK**: Umkreis

## Patentansprüche

1. Verbinder (1) zur Aufnahme eines Kabelabschnitts (50) eines Kabels, umfassend:
eine Kabelhaltevorrichtung (10), wobei die Kabelhaltevorrichtung (10) ausgelegt ist, den Kabelabschnitt (50) in umlaufender Richtung bezüglich einer Zentralachse (A) der Kabelhaltevorrichtung (10) zumindest teilweise zu umschließen, wobei die Kabelhaltevorrichtung (10) mindestens ein Halteschenkelelement (11) aufweist,
wobei jedes Halteschenkelelement (11) eine Außenfläche (12A) aufweist, wobei die Außenfläche (12A) umfasst:
zumindest zwei druckfreie Bereiche, und
zumindest einen Aufdruckbereich, wobei der zumindest eine Aufdruckbereich zwischen den mindestens zwei druckfreien Bereichen angeordnet ist,
wobei das mindestens eine Halteschenkelelement (11) ausgebildet ist, durch eine auf den Aufdruckbereich gerichtete Kraft entlang einer radialen Richtung bezüglich der Zentralachse (A) verlagerbar zu sein, um den Kabelabschnitt (50) an der Kabelhaltevorrichtung (10) zu halten.

2. Der Verbinder (1) gemäß Anspruch 1, wobei der zumindest eine Aufdruckbereich zwischen mindestens zwei druckfreien Bereichen der zumindest zwei druckfreien Bereiche entlang der umlaufenden Richtung angeordnet ist.

3. Der Verbinder (1) gemäß einem der vorangegangenen Ansprüche, wobei ein Abstand der zumindest zwei druckfreien Bereiche von der Zentralachse (A) geringer ist als ein Abstand des Aufdruckbereichs von der Zentralachse (A); und/oder
wobei die Außenfläche (12A) in einer Querschnittsebene senkrecht zur Zentralachse (A) eine erste Krümmung aufweist, wobei die Außenfläche (12A) in der Querschnittsebene einen Maximal-Abstand der Außenfläche (12A) von der Zentralachse (A) aufweist, wobei die erste Krümmung größer ist, als die Krümmung eines Kreises mit einem Radius, der dem Maximal-Abstand entspricht.

4. Der Verbinder (1) gemäß einen der vorangegangenen Ansprüche, wobei die Außenfläche (12A) in mindestens einer Querschnittsebene senkrecht zur Zentralachse (A) mindestens einen entferntesten Punkt mit einem jeweils größten Abstand zur Zentralachse (A) aufweist,
wobei die Außenfläche (12A) in der jeweiligen Querschnittsebene in dem zumindest einen entferntesten Punkt eine Krümmung aufweist, welche größer ist als eine Krümmung eines Kreises mit einem Radius, der dem jeweiligen größten Abstand entspricht.

5. Der Verbinder (1) gemäß einem der vorangegangenen Ansprüche, wobei die Kabelhaltevorrichtung (10) zumindest teilweise formgefräst ist; und/oder
wobei die Kabelhaltevorrichtung (10) ausgelegt ist, in einem Betriebszustand den Kabelabschnitt (50) an der Kabelhaltevorrichtung (10) zu halten, und, optional, wobei in dem Betriebszustand eine Kabelachse des Kabelabschnitts (50) mit der Zentralachse (A) im Wesentlichen parallel ist.

6. Der Verbinder (1) gemäß einem der vorangegangenen Ansprüche, ferner umfassend:
ein Kompressionselement (20), welches derart mit der Kabelhaltevorrichtung (10) verschraubbar ist, dass das Kompressionselement (20) zumindest teilweise eine im Wesentlichen radial nach innen bezüglich der Zentralachse (A) auf den Aufdruckbereich gerichtete Kraft ausübt, um das mindestens eine Halteschenkelelement (11) in Richtung der Zentralachse (A) zu verlagern.

7. Der Verbinder (1) gemäß einem der Ansprüche 1 bis 5, ferner umfassend:
einen Verbinderkörper, wobei der Verbinderkörper ausgelegt ist, den Kabelabschnitt (50) eines Kabels zumindest teilweise in einer Kabelaufnahme des Verbinderkörpers aufzunehmen; und
ein Kompressionselement (20), welches derart mit der Kabelhaltevorrichtung (10) und/oder dem Verbinderkörper verschraubbar ist, dass das Kompressionselement (20) zumindest teilweise eine im Wesentlichen radial nach innen bezüglich der Zentralachse (A) auf den Aufdruckbereich gerichtete Kraft ausübt, um das mindestens eine Halteschenkelelement (11) in Richtung der Zentralachse (A) zu verlagern, und, optional,
wobei der Verbinderkörper und die Kabelhaltevorrichtung (10) einstückig ausgebildet sind, oder wobei die Kabelhaltevorrichtung (10) an dem Verbinderkörper anbringbar ausgebildet ist.

8. Der Verbinder (1) gemäß einem Ansprüche 6 oder 7, wobei das Kompressionselement (20) eine im Wesentlichen kegelstumpfartige Innenfläche (22) aufweist, welche durch Verschrauben des Kompressionselements (20) mit dem Verbinderkörper und/oder der Kabelhaltevorrichtung (10) die im Wesentlichen radial nach innen bezüglich der Zentralachse (A) auf den Aufdruckbereich gerichtete Kraft ausübt,
wobei zwischen der kegelstumpfartigen Innenfläche (22) und der Außenfläche (12A) zumindest eine Schutzeinrichtung (80) angeordnet ist, und, optional:
wobei die zumindest eine Schutzeinrichtung (80) einen Schutzfilm umfasst, und/oder
wobei die zumindest eine Schutzeinrichtung (80) einen Schutzeinleger umfasst.

9. Der Verbinder (1) gemäß einem der vorherigen Ansprüche, wobei die Kabelhaltevorrichtung (10) mindestens zwei Halteschenkelelemente (11) aufweist, und, optional:
wobei jeweils zwei der mindestens zwei Halteschenkelelemente (11) zumindest teilweise einander gegenüberliegend bezüglich der Zentralachse (A) angeordnet sind; und/oder
wobei die mindestens zwei Halteschenkelelemente im Wesentlichen formgleich ausgebildet sind; und/oder
wobei die mindestens zwei Halteschenkelelemente (11) im Wesentlich gleich beabstandet in umlaufender Richtung bezüglich der Zentralachse (A) angeordnet sind; und/oder
wobei mindestens zwei Halteschenkelelemente (11) unterschiedlich von der Zentralachse (A) beabstandet sind.

10. Der Verbinder (1) gemäß einem der vorangegangenen Ansprüche, wobei jedes des mindestens einen Halteschenkelelemente (11) eine der Außenfläche (12A) in radialer Richtung bezüglich der Zentralachse (A) gegenüberliegende Innenfläche (12C) aufweist,
wobei mindestens ein Halteschenkelelement (11) des mindestens einen Halteschenkelelements (11) mindestens eine Halteeinrichtung (18) aufweist, welche an der Innenfläche (12C) angeordnet ist,
wobei die mindestens eine Halteeinrichtung (18) mit dem Kabelabschnitt (50) in Eingriff bringbar ausgebildet ist.

11. Der Verbinder (1) gemäß einem der vorangegangenen Ansprüche, wobei die Außenfläche (12A) des mindestens einen Halteschenkelelements (11) zumindest teilweise im Wesentlichen kegelartig bzw. kegelstumpfartig ausgebildet ist; und/oder
wobei die Außenfläche (12A) des mindestens einen Halteschenkelelements (11) in einer Imaginärebene, welche senkrecht zu der Zentralachse (A) ist und die Außenfläche (12A) schneidet, im Wesentlichen teilkreisartig mit einem ersten Radius ausgebildet ist, wobei der erste Radius geringer ist, als ein maximaler Abstand zwischen der Außenfläche (12A) und der Zentralachse (A) in der Imaginärebene.

12. Der Verbinder (1) gemäß einem der vorherigen Ansprüche, wobei die Außenfläche (12A) genau einen Aufdruckbereich und zwei druckfreie Bereiche aufweist, wobei der genau eine Aufdruckbereich zwischen den zwei druckfreien Bereichen angeordnet ist.

13. Verwendung eines Verbinders (1) gemäß einem der Ansprüche 1 bis 12 zum Aufnehmen eines Kabelabschnitts (50) in dem Verbinder (1).

14. Verfahren zur Herstellung eines Verbinders (1) zur Aufnahme eines Kabelabschnitts (50) eines Kabels, umfassend:
Herstellen einer Kabelhaltevorrichtung (10), wobei die Kabelhaltevorrichtung (10) ausgelegt ist, den Kabelabschnitt (50) in umlaufender Richtung bezüglich einer Zentralachse (A) der Kabelhaltevorrichtung (10) zumindest teilweise zu umschließen, das Herstellen umfassend:
ein Ausbilden mindestens eines Halteschenkelelements (11) der Kabelhaltevorrichtung (10), wobei das mindestens eine Halteschenkelelement (11) eine Außenfläche (12A) aufweist, wobei die Außenfläche (12A) mindestens zwei druckfreie Bereiche und mindestens einen Aufdruckbereich umfasst, wobei der mindestens eine Aufdruckbereich zwischen mindestens zwei druckfreien Bereichen der mindestens zwei druckfreien Bereiche angeordnet ist,
wobei das mindestens eine Halteschenkelelement (11) ausgebildet ist, durch eine auf den mindestens einen Aufdruckbereich gerichtete Kraft entlang einer radialen Richtung bezüglich der Zentralachse (A) verlagerbar zu sein, um den Kabelabschnitt (50) an der Kabelhaltevorrichtung (10) zu halten.

15. Das Verfahren gemäß Anspruch 14, wobei das Ausbilden des mindestens einen Halteschenkelelements (11) ein Formfräsen der Außenfläche (12A) des mindestens einen Halteschenkelelements (11) umfasst.
